# EUROPEAN PATENT APPLICATION

(11) **EP 4 749 421 A1**
(43) Date of publication of application: **27.05.2026**
(21) Application number: 24865751.2
(22) Date of filing: 03.09.2024
(51) Int. Cl.: G06F 3/04842, G06F 16/34, G06F 40/109, G06Q 50/10, G06F 3/0485

(54) **METHOD FOR PROVIDING SUMMARY CONTENT AND ELECTRONIC DEVICE THEREFOR**

(30) Priority: 15.09.2023 KR 20230123433; 02.01.2024 KR 20240000428
(71) Applicant: Samsung Electronics Co., Ltd., Suwon-si, Gyeonggi-do 16677 (KR)
(72) Inventor: LEE, Eunkyung, Suwon-si, 16677 (KR); KIM, Taegu, Suwon-si, 16677 (KR); SON, Dongil, Suwon-si, 16677 (KR)
(74) Representative: HGF
(86) International application number: PCT/KR2024/013264
(87) International publication number: WO 2025/058310

(57) **Abstract**

An embodiment of the present invention may comprise a display, a processor, and a memory. When executed by the processor, instructions stored in the memory may instruct an electronic device: identify a screen size of at least a portion of a user interface (UI) screen for displaying summary content and a front size to be used to display the summary content; identify the length of text for the summary content on the basis of the screen size and the front size; transmit a request, including first information related to the summary content and second information related to the length of the text associated with the summary content, to a server on the basis of a user input; acquire the summary content, in association with the request, from the server; and display at least a portion of the user interface screen via the display on the basis of the acquired summary content.

## Description

### [Technical Field]

Various embodiments of the disclosure relate to a method of providing summary content and an electronic device therefor.

### [Background Art]

With the development of digital technologies, various types of electronic devices such as mobile communication terminals, personal digital assistants (PDAs), electronic organizers, smartphones, tablet personal computers (PCs), and wearable devices have become widely used. The hardware parts and/or software parts of such electronic devices are continually improving in order to improve support and increase functions thereof.

For example, an electronic device is designed to gradually increase the size of the screen on the display to provide various services to users through a large screen. The electronic device may have a new form factor, such as a multi-display (e.g., dual display) device (e.g., a foldable electronic device, a rollable device, or a slidable device). A foldable electronic device may include a folding (or bending) display (e.g., a foldable display or a flexible display), and may be used while being folded or unfolded. A rollable device or a slidable device may include a flexible display, and may roll the flexible display toward the rear surface of the rollable device to store the same or expand the flexible display toward the front surface of the rollable device to use the same.

### [Disclosure of Invention]

### [Technical Problem]

Products of various form factors are being released, and thus the sizes of displays that provide results to users are also becoming more diverse. However, due to the display size, an additional input from the user may be required in the end to identify accurate information. The technology of understanding language through a large language model (LLM) and summarizing or shortening sentences of long text is being developed. However, there may be a cost burden in contacting an LLM server every time summary information is needed.

In an embodiment, a method and an apparatus for, when content requested by a user is not displayed on one screen, identifying the length of text, based on the size of the screen for displaying the content and the font size, and generating (or receiving) summary content, based on the length of the text, thereby providing the summary content instead of original content may be disclosed.

### [Solution to Problem]

An electronic device 101 according to an embodiment of the disclosure may include a display 160, a processor 120, and a memory 130, wherein instructions stored in the memory may cause, when the processor is executed, the electronic device to identify a screen size of at least a part of a user interface (UI) screen for displaying summary content and font size to be used for displaying the summary content, identify a length of text for the summary content, based on the screen size and the font size, transmit a request including first information related to the summary content and second information related to the length of the text associated with the summary content to a server, based on a user input, acquire the summary content from the server in response to the request, and display at least the part of the user interface screen through the display, based on the acquired summary content.

A method of operating an electronic device 101 according to an embodiment of the disclosure may include identifying a screen size of at least a part of a user interface (UI) screen for displaying summary content and font size to be used for displaying the summary content, identifying a length of text for the summary content, based on the screen size and the font size, transmitting a request including first information related to the summary content and second information related to the length of the text associated with the summary content to a server, based on a user input, acquiring the summary content from the server in response to the request, and displaying at least the part of the user interface screen through the display of the electronic device, based on the acquired summary content.

### [Advantageous Effects of Invention]

According to an embodiment, it is possible to make a request for summary content to an LLM server by determining the size of a screen (window or display) to display content at a time point at which processing of a large language model (LLM) is needed and determining the length (size or amount) of summary content suitable for the screen size.

According to an embodiment, it is possible to identify how much to summarize the original content, based on the length of the text.

According to an embodiment, by determining whether on-device processing is possible and generating summary content directly by the electronic device, it is possible to reduce server usage costs without using the LLM server every time.

### [Brief Description of Drawings]

FIG. 1 is a block diagram illustrating an electronic device within a network environment according to an embodiment.
FIG. 2 is a diagram illustrating an example of various screen sizes of an electronic device according to an embodiment.
FIG. 3 is a flowchart illustrating a method of operating the electronic device according to an embodiment.
FIG. 4 is a diagram illustrating an example in which an electronic device configures an application-specific summary according to an embodiment.
FIG. 5 is a diagram illustrating an example in which an electronic device provides summary content according to an embodiment.
FIGs. 6A and 6B are diagrams illustrating an example in which an electronic device provides summary content according to an embodiment.
FIG. 7 is a flowchart illustrating an operation method between an electronic device and a server according to an embodiment.
FIG. 8 is a flowchart illustrating a method by which an electronic device provides summary content according to an embodiment.
FIG. 9A is a diagram illustrating an example in which an electronic device configures a font size according to an embodiment.
FIGs. 9B and 9C are diagrams illustrating an example in which an electronic device provides summary content according to an embodiment.
FIG. 10A is a diagram illustrating an example in which an electronic device displays original content and summary content according to an embodiment.
FIG. 10B is a diagram illustrating an example in which an electronic device displays original content and summary content according to an embodiment.
FIG. 11A is a diagram illustrating an example in which an electronic device changes summary content to original content according to an embodiment.
FIG. 11B is a diagram illustrating an example in which an electronic device compares summary content with original content according to an embodiment.
FIG. 12A is a diagram illustrating an example in which an electronic device changes and displays summary content to original content, according to an embodiment.
FIG. 12B is a diagram illustrating an example in which an electronic device displays summary contents differently according to font sizes according to an embodiment.
FIGs. 13A and 13B are diagrams illustrating an example in which an electronic device differently displays summary content depending on a screen size according to an embodiment.
FIG. 14 is a flowchart illustrating a method by which an electronic device acquires summary content according to an embodiment.
FIG. 15A is a diagram illustrating an example in which an electronic device notifies of displaying of summary content according to an embodiment.
FIG. 15B is a diagram illustrating an example in which an electronic device notifies of displaying of summary content according to an embodiment.
FIG. 16A is a diagram illustrating an example in which an electronic device displays summary content in a state of being connected to another electronic device according to an embodiment.
FIG. 16B is a diagram illustrating an example in which an electronic device displays summary content depending on a screen size according to an embodiment.
FIGs. 17A to 17D are diagrams illustrating an example in which an electronic device displays summary content depending on the size of an area in an application according to an embodiment.
FIGs. 18A and FIG. 18B are diagrams illustrating an example in which an electronic device displays summary content depending on a screen size according to an embodiment.
FIG. 19 is a diagram illustrating an example in which an electronic device displays summary content depending on a screen size according to an embodiment.
FIG. 20A is a diagram illustrating an example of a prompt related to the generation of summary content in an electronic device according to an embodiment.
FIG. 20B is a diagram illustrating an example in which an electronic device trains a model for generating summary content according to an embodiment.
FIGs. 21A and 21B are diagrams illustrating an example of the size of a screen for displaying summary content in an electronic device according to an embodiment.
FIGs. 22A to 22C are diagrams illustrating an example of an electronic device having various screen sizes according to an embodiment.
FIG. 23 is a block diagram illustrating an example of a generative artificial intelligence system according to an embodiment.

### [Mode for the Invention]

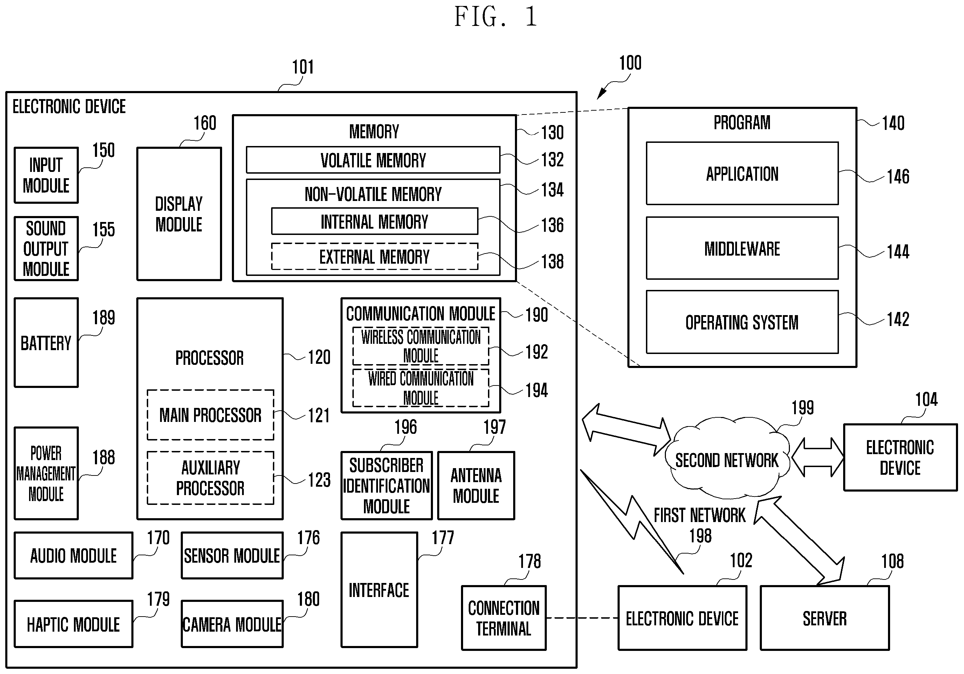

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities mat be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

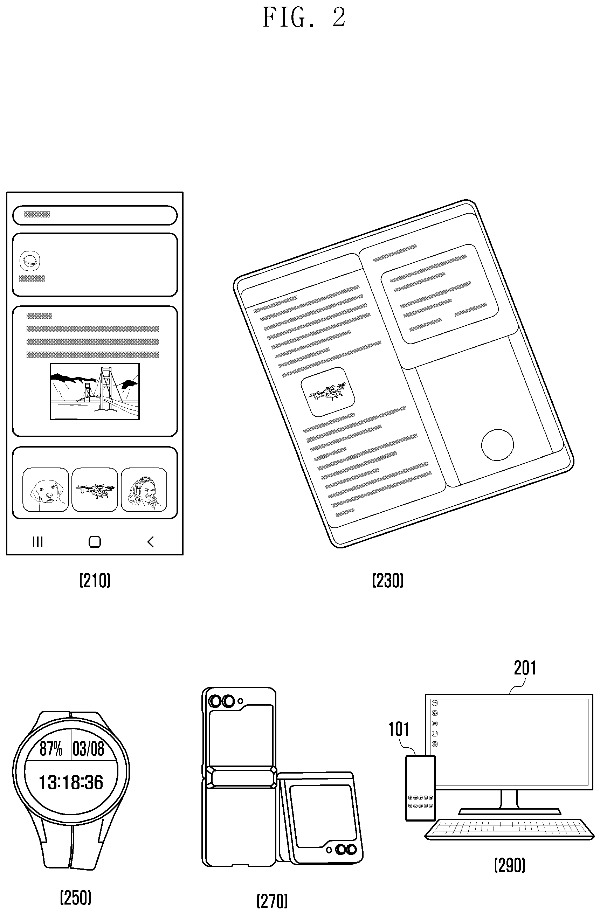

FIG. 2 is a diagram illustrating an example of various screen sizes of an electronic device according to an embodiment.

Referring to FIG. 2 , an electronic device (e.g., the electronic device 101 in FIG. 1) according to an embodiment may include a display having various sizes or various shapes. For example, a first example 210 may be an example of an electronic device including one display having a rectangular shape. A second example 230 is an example of an electronic device including at least two displays, and the size of one display may be greater than the size of the display included in the electronic device in the first example 210. A third example 250 may be an example of a wearable device including a circular display. A fourth example 270 is an example of an electronic device including at least two displays, and the size of one of the displays may be smaller than the size of the display included in the electronic device in the first example 210. A fifth example 290 illustrates a state in which the electronic device 101 is connected to another electronic device 201 (e.g., a computer), and the electronic device 101 may display content through the display of the electronic device 101 or the display of the other electronic device 201.

An electronic device 101 according to an embodiment of the disclosure may include a display 160, a processor 120, and a memory 130, wherein instructions stored in the memory may cause, when the processor is executed, the electronic device to identify a screen size of at least a part of a user interface (UI) screen for displaying summary content and font size to be used for displaying the summary content, identify a length of text for the summary content, based on the screen size and the font size, transmit a request including first information related to the summary content and second information related to the length of the text associated with the summary content to a server, based on a user input, acquire the summary content from the server in response to the request, and display at least the part of the user interface screen through the display, based on the acquired summary content.

The first information may include original content associated with the summary content or information for acquiring the original content.

The instructions may cause, when the processor is executed, the electronic device to identify, as the screen size, at least one of a size of one window among multiple windows, a size of an activated display area of the display, or a size of a predetermined content area within an application.

The instructions may cause, when the processor is executed, the electronic device to, when original content of content requested by a user is equal to or less than a predetermined reference value of the screen size, display the original content and, when the original content of the content requested by the user exceeds the predetermined reference value of the screen size, identify the length of the text for acquiring the summary content.

The instructions may cause, when the processor is executed, the electronic device to determine whether the generation of the summary content is possible and, when the generation of the summary content is possible, generate the summary content, based on the determined length of the text.

The instructions may cause, when the processor is executed, the electronic device to, when an image is included in original content associated with the summary content, include a size of an image associated with the summary content and a number of images in the second information.

The instructions may cause, when the processor is executed, the electronic device to, when a size of a screen for displaying the summary content while the acquired summary content is displayed, reconfigure and display the summary content, based on the changed screen size.

The instructions may cause, when the processor is executed, the electronic device to perform control to display original content following the summary content, based on a scroll input of a user.

The instructions may cause, when the processor is executed, the electronic device to display the summary content instead of original content associated with the summary content, based on an application configuration.

The instructions may cause, when the processor is executed, the electronic device to display an object indicating the summary content while the acquired summary content is displayed and display original content associated with the summary content instead of the summary content, based on a user input of selecting the object.

An electronic device 101 according to an embodiment of the disclosure may include a display 160, a processor 120, and a memory 130, wherein instructions stored in the memory may cause, when the processor is executed, the electronic device to identify a screen size of at least a part of a user interface (UI) screen for displaying summary content and font size to be used for displaying the summary content, identify a length of text for the summary content, based on the screen size and the font size, identify content to be summarized based on a user input, generate the summary content, based on the identified length of the text, and display at least the part of the user interface screen through the display, based on the generated summary content.

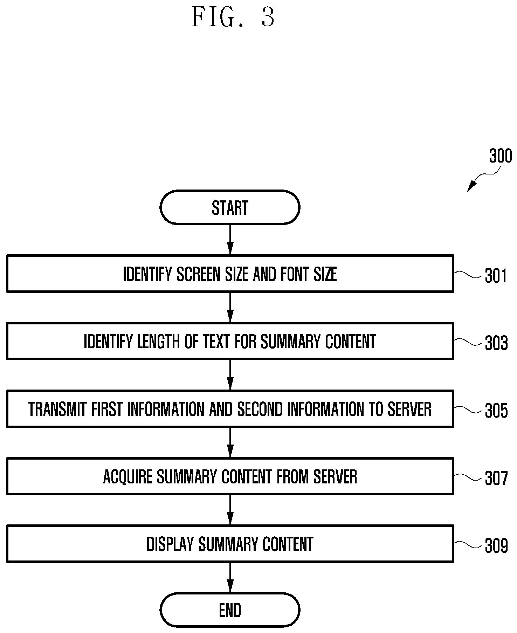

FIG. 3 is a flowchart 300 illustrating a method of operating an electronic device according to an embodiment.

Referring to FIG. 3, in operation 301, a processor (e.g., the processor 120 in FIG. 1) of an electronic device (e.g., the electronic device 101 in FIG. 1) according to an embodiment may identify a screen size and/or a font size. For example, the processor 120 may identify a screen size in which content is displayed on a display (e.g., the display module 160 in FIG. 1) of the electronic device 101. The processor 120 may identify a screen size of at least a portion of a user interface (UI) screen for displaying the summary content and a font size to be used to display the summary content. The processor 120 may identify the screen size and/or the font size to display the requested content in response to a user's content request (e.g., a user query or a voice request). The requested content may include (or constitute) at least one of text, an image, or a video. The screen size may be the size (or display size) of an area for displaying the requested content (or an area in which the content is displayed).

For example, when receiving the user's content request while displaying a multi-window on the display (e.g., the display module 160 in FIG. 1) of the electronic device 101, the processor 120 may identify (or determine) the size of any one of the multi-window as the screen size. Alternatively, when the processor 120 is to display the requested content in a pop-up window, the processor 120 may identify the size of the pop-up window or the area in which the content is to be displayed in the pop-up window as the screen size. Alternatively, when a cover (or case) is mounted on the electronic device 101, the processor 120 may identify, as the screen size, the size of an activated (or exposed) display area of the display module 160 by the cover in the entire display area of the display module 160. The processor 120 may identify the size of a content area designated in an application as the screen size. For example, a designated content area in a message application may be a bubble area for displaying one piece of message content. The size of the bubble area may vary depending on the size of the display module 160, and may vary depending on the size of the activated display area of the display module 160.

The font size may be a font size configured in the electronic device 101 or a font size configured in an application. The processor 120 may identify the font size configured in the electronic device 101 or the font size configured in the application associated with the requested content. When the font size configured in the electronic device 101 and the font size configured in the application are different, the processor 120 may use the font size configured in the application to determine the length of the text. The font size configured in the application may have higher priority than the font size configured in the electronic device 101.

In operation 303, the processor 120 may identify the length (or size) of the text. The length of the text may be a reference for providing summary content obtained by summarizing the original content. When the original content of the requested content exceeds a predetermined reference value (e.g., 1.2 times) of the screen size, the processor 120 may determine that the original content cannot be displayed on the requested screen and determine whether to summarize the content. The processor 120 may identify the length of the text, based on the identified screen size and/or the identified font size. For example, identifying the length (or size) of the text may refer to determining the size (length) of the summarized content to be displayed on the screen on which the content is to be displayed. For example, when the content is text, the number of characters that may be displayed on the screen may be determined based on the screen size and the font size. According to an embodiment, when an image is included in the content (e.g., original content) requested by the user, the processor 120 may identify the size of an image associated with the summary content or the number of images.

When the font size is the same, the processor 120 may identify that the length of the text is large (or long) when the screen size is large, and identify that the length of the text is small (or short) when the screen size is small. When the screen size is the same, the processor 120 may identify that the length of the text is greater (long) when the font size is large, and identify that the length of the text is smaller (short) when the font size is small.

The processor 120 may identify the length of the text by calculating the maximum number of characters that can be displayed on the screen, based on the screen size and the font size, or when an image is included in the original content, may identify the length of the text by adjusting the maximum number of characters of the text to be short, based on the number of images and the image size. In addition, the determined length of the text is the maximum length, and the summary content may be smaller (shorter) than the determined length of the text.

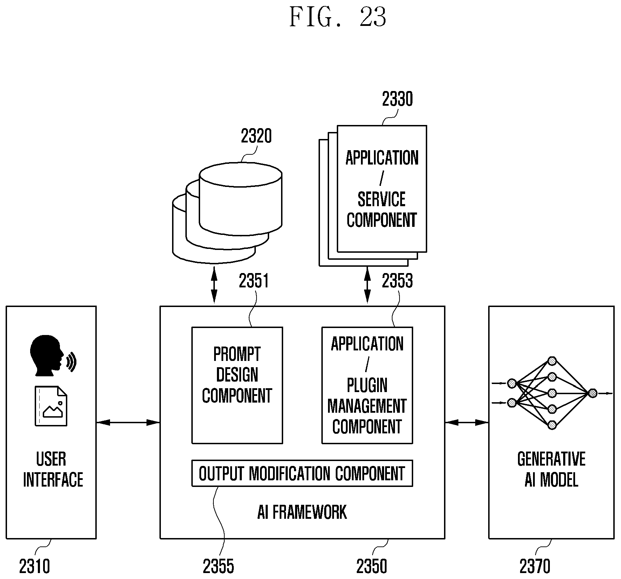

In operation 305, the processor 120 may transmit first information and second information to a server (e.g., the server 108 in FIG. 1, or a generative artificial intelligence system in FIG. 23). The server 108 may be a server to which large language model (LLM) technology is applied. The first information may be related to the summary content, and the second information may be related to the length of the text. For example, the first information may include the original content itself or information (e.g., URL) for obtaining the original content. The processor 120 may inform the server 108 of which original content the user has requested. In addition, the processor 120 may make a request for the summary content by including the length of the text in the second information and transmitting the same to the server 108. The server 108 may generate the summary content, based on the length of the text and the original content, and transmit the generated summary content to the electronic device 101.

According to an embodiment, the summary content received from the server 108 may be equal to or smaller (or shorter) than the length of the text. That is, the summary content may not exceed the length of the text. When the original content is generated in real time through the generative AI, the processor 120 may transmit the length of the text to the server 108 without the original content. The server of the generative AI may be the same as the LLM server.

In operation 307, the processor 120 may acquire the summary content from the server. The processor 120 may receive the summary content through a communication module (e.g., the communication module 190 in FIG. 1). The summary content may include (or constitute) at least one of text, an image, or a video. The summary content may be directly generated (e.g., on-device) by the electronic device 101 or received from a large language model (LLM) server (e.g., the server 108 of FIG. 1). According to an embodiment, the processor 120 may determine whether on-device processing is possible, and if on-device processing is possible, generate the summary content. For example, the processor 120 may include an LLM management module, search for a small large language (LM) using the LLM management module (e.g., retrieval) and, when there is a supported small LM, determine that on-device processing is possible. The small LM may learn about domains and functions for generating summary content, so as to generate summary content. When on-device processing is not possible, the processor 120 may make a request for summary content to the server 108. When there is no small LM for generating summary content, the processor 120 may determine that on-device processing is not possible. The processor 120 may receive the summary content from the server 108 according to the request.

In operation 309, the processor 120 may display the summary content. The summary content may be a summary of the original content to match a predetermined screen size. The processor 120 may display the summary content on the screen for displaying the requested content. When the processor 120 makes a request for the summary content to the server 108, the processor 120 may receive the summary content from the server 108 and display the same on the screen. According to an embodiment, when the original content of the requested content is less than or equal to a predetermined reference value of the screen size, the processor 120 may display the original content on the requested screen.

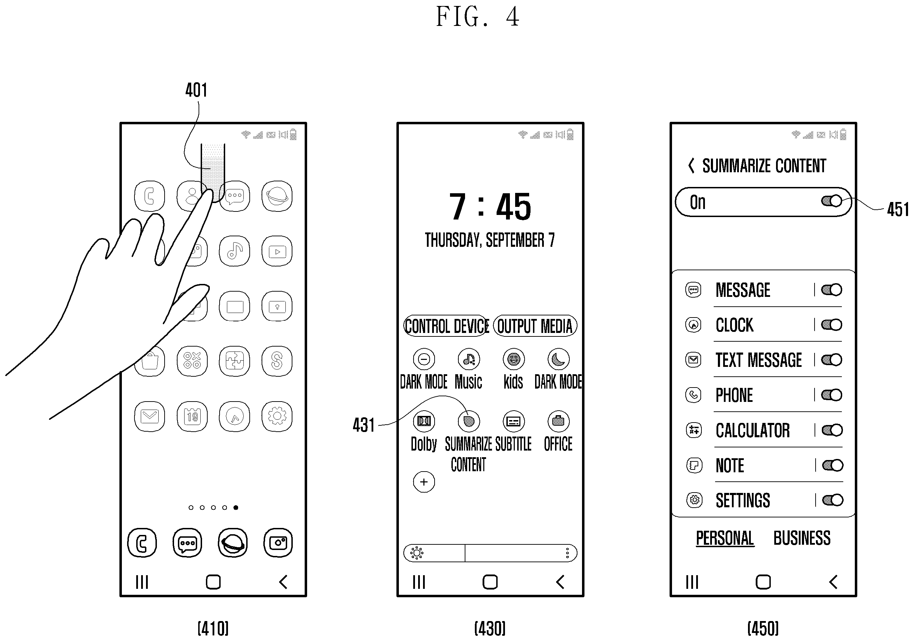

FIG. 4 is a diagram illustrating an example for configuring an application-specific summary in an electronic device according to an embodiment.

Referring to FIG. 4, a processor (e.g., the processor 120 in FIG. 1) of an electronic device (e.g., the electronic device 101 in FIG. 1) according to an embodiment may detect a user input 401 on a home screen display, like a first user interface 410. The user input 401 may include a touch input of dragging (or swiping) in the inner direction of a display (for example, the display module 160 in FIG. 1) from the bezel area of the electronic device 101. The processor 120 may provide a second user interface 430 in response to the user input 401. The second user interface 430 may include quick function items. The quick function item may refer to an item that allows for immediate execution of some of the various useful functions of the electronic device 101, which have high usability, without multiple selection inputs. The second user interface 430 may include summarize content 431 as one of the quick function items.

When the summarize content 431 is selected, the processor 120 may provide a third user interface 450. The third user interface 450 may include a toggle button 451 for indicating whether to use (e.g., activate) the summarize content. When the toggle button 451 is turned on, it may determined whether to use (or activate) the summarize content for each application. For example, the user may configure to use of the summarize content for a first application and configure not to use the summarize content for a second application. When summarize content is used, the original content may be provided after the summarized content when the requested content is provided. In other words, when the summarize content is activated (e.g., turned on), the summary content may be preferentially displayed over the original content.

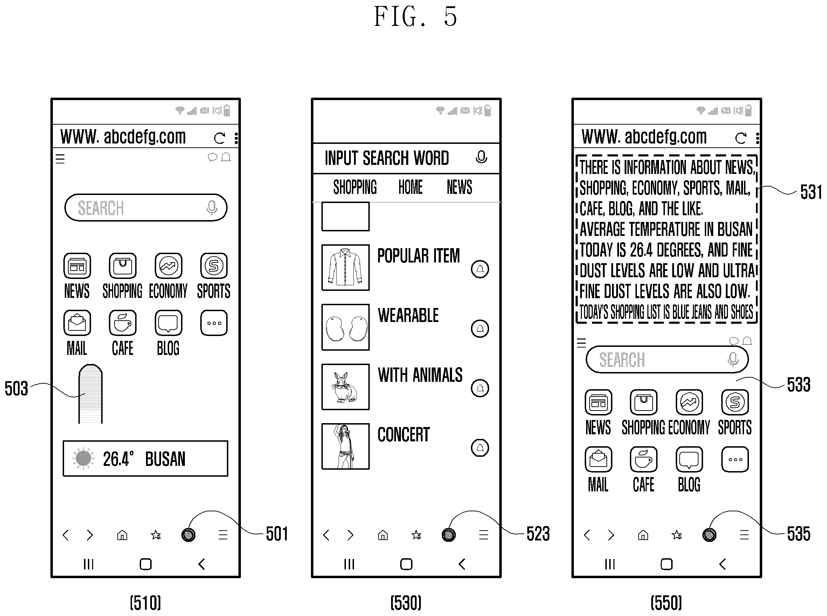

FIG. 5 is a diagram illustrating an example in which an electronic device provides summary content according to an embodiment.

Referring to FIG. 5, a processor (e.g., the processor 120 in FIG. 1) of an electronic device (e.g., the electronic device 101 in FIG. 1) according to an embodiment may provide (e.g., display on a display (e.g., the display module 160 in FIG. 1)) an execution screen of an application, like a first user interface 510. The application is a search application, and the first user interface 510 may be a web page screen. The first user interface 510 may include a first object 501 (e.g., an icon) indicating whether the summary content is provided. The first object 501 may indicate whether the content displayed in the first user interface 510 is summary content or not, and may be used to activate or deactivate summary content. The first object 501 displayed in the first user interface 510 may indicate that the content displayed in the first user interface 510 is not the summary content.

When a user input 503 of scrolling is detected in the first user interface 510, the processor 120 may provide a second user interface 530. The second user interface 530 may include a second object 523 indicating that the content displayed in the second user interface 530 is not the summary content. The second user interface 530 may be one of the screens configuring the same web page as the first user interface 510.

When the second object 523 is selected, the processor 120 may provide a third user interface 550. When the second object 523 is selected in a state in which the content displayed in the second user interface 530 is not the summary content, the processor 120 may determine that the user made a request for the summary content. When the second object 523 is selected, the processor 120 may generate (or receive) the summary content obtained by summarizing the content that constitutes one web page, and provide a third user interface 550. The third user interface 550 may include summary content 531, original content 533, and a third object 535. The processor 120 may perform control to display the original content 533 after the summary content 531, and display the third object 535 indicating that the summary content is included in the content displayed in the third user interface 550. The third object 535 may be displayed to be distinguishable from the first object 501 or the second object 523.

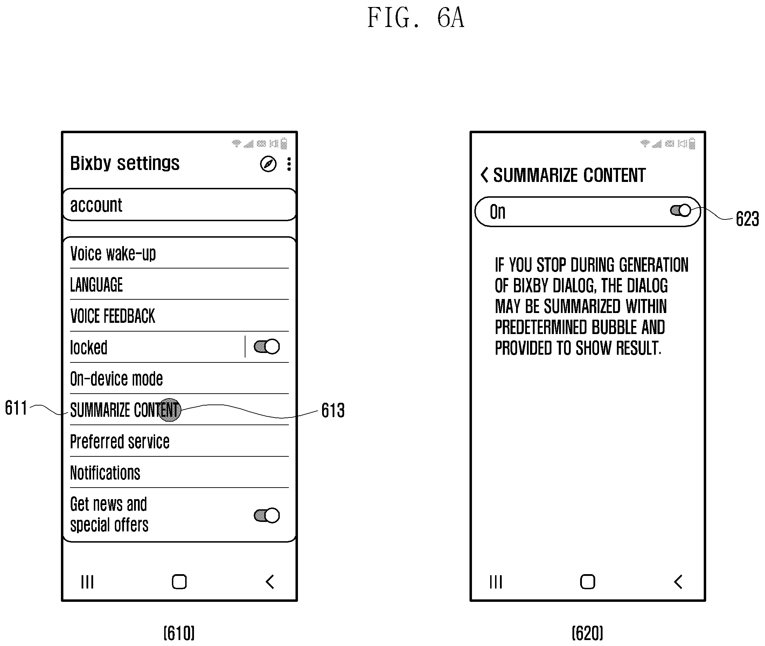

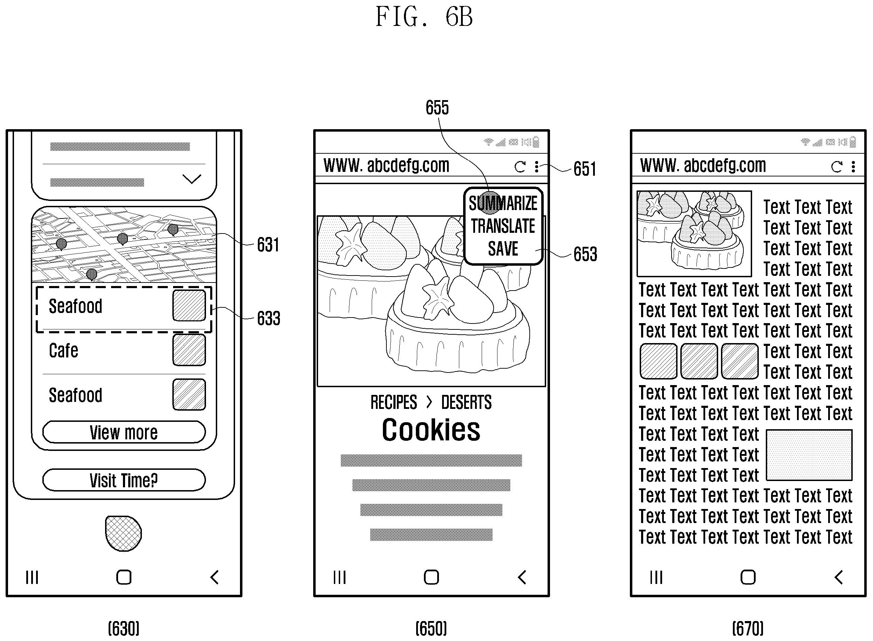

FIGs. 6A and 6B are diagrams illustrating an example in which an electronic device provides summary content according to an embodiment.

Referring to FIG. 6A, a processor (e.g., the processor 120 in FIG. 1) of an electronic device (e.g., the electronic device 101 in FIG. 1) according to an embodiment may display a configuration screen of an application, like a first user interface 610. The application is a voice recognition service, and the first user interface 610 may include a configuration item of the voice recognition service. When a user input 613 for selecting summarize content 611 is detected in the configuration item, the processor 120 may provide a second user interface 620. The second user interface 620 may include a toggle button 623 indicating whether to use (e.g., activate) the summarize content in the voice recognition service. The user may touch the toggle button 623 to activate or deactivate the summarize content in the voice recognition service.

Referring to FIG. 6B, the processor 120 may display a third user interface 630 including content 631 associated with a map application in the application execution screen of the voice recognition service. When at least one item 633 in the content 631 is selected in the third user interface 630, the processor 120 may provide a fourth user interface 650. The processor 120 may directly enter a fifth user interface 670 according to the configuration in the third user interface 630. The fourth user interface 650 may include content (e.g., original content) corresponding to the selected item 633. When a predetermined item 651 is selected in the fourth user interface 650, a menu item 653 including summarization 655 may be provided. The processor 120 may provide an object (e.g., summarization 655) for making a request for summary content in the form of a pop-up window.

When the summarization 655 is selected in the menu items 653, the processor 120 may display the fifth user interface 670. The fifth user interface 670 may include summary content of the original content displayed in the fourth user interface 650. The summary content included in the fifth user interface 670 is a summary of the original content scrolled in the fourth user interface 650, and the summary content may be a summary image obtained by summarizing the text included in the original content, and reducing the size of the image included in the original content or displaying only some images. The summary content may include at least one of text, an image, or a video.

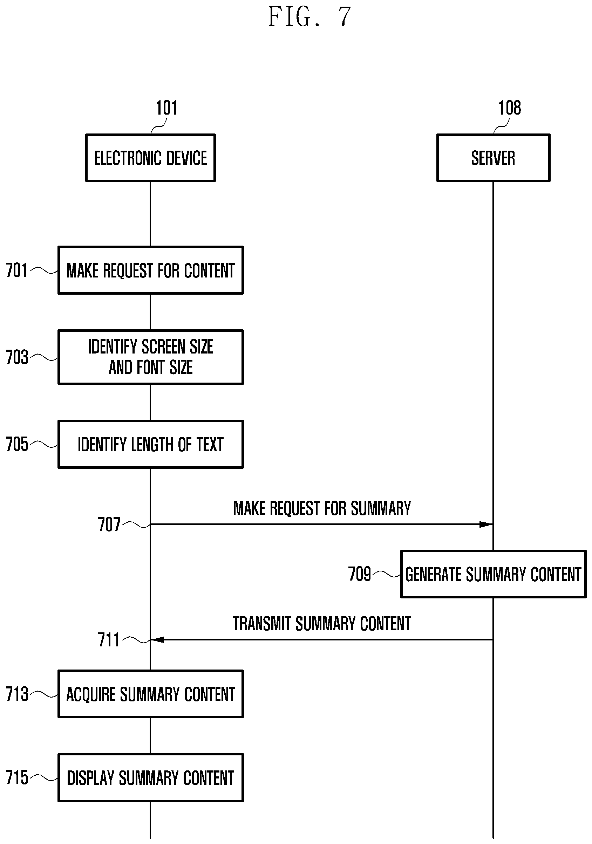

FIG. 7 is a flowchart illustrating an operation method between an electronic device and a server according to an embodiment.

Referring to FIG. 7, in operation 701, an electronic device (e.g., the electronic device 101 of FIG. 1) according to an embodiment may receive a content request. The content request is received from the user, and may be a user query or a voice request. The requested content may include (or constitute) at least one of text, an image, or a video.

In operation 703, the electronic device 101 may identify a screen size and/or a font size. The screen size may be a size (or display size) of at least a part of a user interface (UI) screen for displaying the summary content. The screen size may include at least one of the size of one of the multi-window, the size of a pop-up window, the size of an activated display area, or the size of a predetermined content area in an application.

For example, when the electronic device 101 receives a content request from a user while displaying the multi-window on a display (e.g., the display module 160 of FIG. 1) of the electronic device 101, the electronic device 101 may identify (or determine) the size of one of the multi-window as the screen size. Alternatively, when it is needed to display the requested content as a pop-up window, the electronic device 101 may identify the size of the pop-up window or the area in which the content is displayed in the pop-up window as the screen size. Alternatively, when a cover (or case) is mounted on the electronic device 101, the electronic device 101 may identify, as the screen size, the size of an activated (or exposed) display area of the display module 160 by the cover in the entire display area of the display module 160. The electronic device 101 may identify the size of a predetermined content area in the application as the screen size. For example, a predetermined content area in a message application may be a bubble area for displaying one piece of message content.

The font size may be a font size configured in the electronic device 101 or a font size configured in an application. The font size may be used to display the summary content. The processor 120 may identify the font size configured in the electronic device 101 or the font size configured in the application associated with the requested content. When the font size configured in the electronic device 101 and the font size configured in the application are different, the processor 120 may use the font size configured in the application to determine the length of the text. The font size configured in the application may have higher priority than the font size configured in the electronic device 101.

In operation 705, the electronic device 101 may identify the length of the text. The length of the text may be a reference for providing summary content obtained by summarizing the original content. The electronic device 101 may calculate the maximum number of characters that can be displayed within the screen, based on the identified screen size and font size and determine the length of the text, or, when an image is included in the original content, shorten the maximum number of characters of the text according to the number of images and the image size and determine the length of the text. In addition, the determined length of the text may have a maximum length, and the summary content may be smaller (shorter) than the determined length of the text.

When the original content of the requested content exceeds a predetermined reference value of the screen size, the electronic device 101 may determine that the original content cannot be displayed on the requested screen and determine the length of text. The electronic device 101 may determine the length of the text, based on the identified screen size and/or the identified font size.

According to an embodiment, the electronic device 101 may determine whether on-device processing is possible, and when on-device processing is possible, may omit operations 707 to 711. When on-device processing is not possible, the electronic device 101 may perform operations 707 to 711.

In operation 707, the electronic device 101 may make a request for a summary to an LLM server (e.g., the server 108 of FIG. 1 or the generative artificial intelligence system of FIG. 23). The electronic device 101 may transmit, to the server 108, a request including first information related to the summary content and second information related to the length of the text associated with the summary content, based on a user input. The first information may include the original content related to the summary content or information (e.g., URL) for acquiring the original content. The second information may include the length of the text. When an image is included in the original content related to the summary content, the second information may further include the size of the image related to the summary content or the number of images.

The electronic device 101 may make a request for the summary content by transmitting the first information and the second information to the server 108. When the original content is generated in real time through the server 108, the electronic device 101 may transmit the length of the text to the server 108 without the original content.

In operation 709, the server 108 may generate the summary content. For example, when the server 108 receives the length of the text from the electronic device 101 in response to the summary request, the server 108 may generate the summary content, based on the length of the text. Since the length of the text is generated based on the size of the screen for displaying the summary content and/or the font size, the server 108 may convert (or process) the original content into the summary content in accordance with the length of the text. When the server 108 receives the length of the text and the original content from the electronic device 101 in response to the summary request, the server 108 may generate the summary content, based on the length of the text and the original content.

In operation 711, the server 108 may transmit the generated summary content to the electronic device 101.

In operation 713, the electronic device 101 may acquire the summary content. The acquired summary content may be generated directly by the electronic device 101 or received from the server 108.

In operation 715, the electronic device 101 may display the summary content. The summary content may be a summary of the original content to match a predetermined screen size. The electronic device 101 may display the summary content on the screen for displaying the requested content. According to an embodiment, when the original content of the requested content is less than or equal to a predetermined reference value, the electronic device 101 may display the original content on the requested screen.

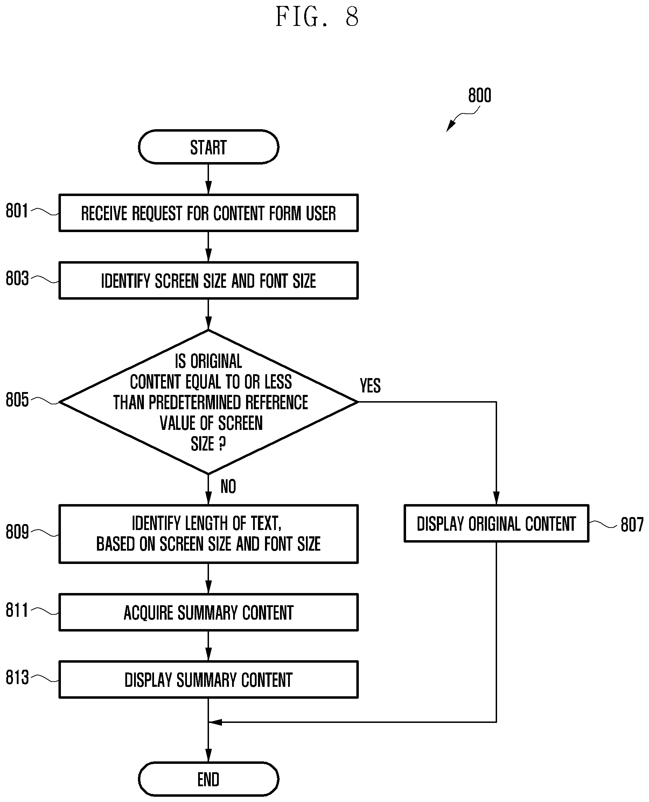

FIG. 8 is a flowchart 800 illustrating a method by which an electronic device provides summary content according to an embodiment.

Referring to FIG. 8, in operation 801, a processor (e.g., the processor 120 in FIG. 1) of an electronic device (e.g., the electronic device 101 in FIG. 1) according to an embodiment may receive a content request from a user. For example, the user may make a request for content by selecting one of the items in an application, inputting a search word into a webpage, or inputting a question (for example, a user query or a voice request) into a voice recognition service.

In operation 803, the processor 120 may identify the screen size and/or font size. The screen size may be a size (or display size) of an area to display the requested content. The screen size may include at least one of the size of one of the multi-window, the size of a pop-up window, the size of an activated display area, or the size of a predetermined content area in an application. The font size may be a font size configured in the electronic device 101 or a font size configured in an application. The processor 120 may identify the font size configured in the electronic device 101 or the font size configured in the application associated with the requested content.

In operation 805, the processor 120 may determine whether the original content is less than or equal to the predetermined reference value. The processor 120 may determine whether the original content to be displayed by the content request can be displayed on a display (e.g., the display module 160 of FIG. 1). The processor 120 may perform operation 807 when the original content is less than or equal to the predetermined reference value of the screen size, and may perform operation 809 when the original content is exceeds the predetermined reference value of the screen size.

When the size of the original content is less than or equal to the predetermined reference value of the screen size, the processor 120 may display the original content in operation 807. When the original content is less than or equal to the predetermined reference value, the processor 120 may determine that the original content can be displayed. When the original content can be displayed on the predetermined screen in response to the content request, the processor 120 may display the original content.

When the size of the original content exceeds the predetermined reference value of the screen size, the processor 120 may identify the length of the text, based on the screen size and/or the font size in operation 809. The length of the text may be a reference for providing summary content obtained by summarizing the original content. When the original content of the requested content exceeds the predetermined reference value of the screen size, the processor 120 may determine that the original content of the requested content cannot be displayed on the requested screen and determine the length of the text. For example, when the identified font size is the same, the processor 120 may determine the length of the text to be long if the identified screen size is large, and may determine the length of the text to be short if the identified screen size is small. When the identified screen size is the same, the processor 120 may determine the length of the text to be long if the identified font size is large and determine the length of the text to be short if the identified font size is small.

In operation 811, the processor 120 may acquire summary content. The summary content may include (or constitute) at least one of text, image, or video. The summary content may be directly generated (e.g., on-device) by the electronic device 101 or may be received from an LLM server (e.g., the server 108 of FIG. 1 or the generative AI system of FIG. 23). The processor 120 may transmit a request including first information related to the summary content and second information related to the length of the text associated with the summary content to the server, based on the user input. The first information may include the original content related to the summary content or information (e.g., URL) for acquiring the original content. The second information may include the length of the text. When an image is included in the original content related to the summary content, the second information may further include the size of the image related to the summary content or the number of images.

According to an embodiment, the processor 120 may determine whether on-device processing is possible, and if on-device processing is possible, generate the summary content. When on-device processing is not possible, the processor 120 may make a request for summary content to the server 108. When there is no small LM for generating summary content, the processor 120 may determine that on-device processing is not possible. The processor 120 may receive the summary content from the server 108 according to the request.

According to an embodiment, the processor 120 may request the summary content by transmitting the length of the text to the server 108. The server 108 may generate the summary content, based on the length of the text, and transmit the generated summary content to the electronic device 101. Alternatively, the processor 120 may make a request for the summary content by transmitting the length of the text and the original content to the server 108. The server 108 may generate the summary content, based on the length of the text and the original content, and transmit the generated summary content to the electronic device 101.

In operation 813, the processor 120 may display the summary content. The summary content may be a summary of the original content to match a predetermined screen size. The processor 120 may display the summary content on the screen for displaying the requested content.

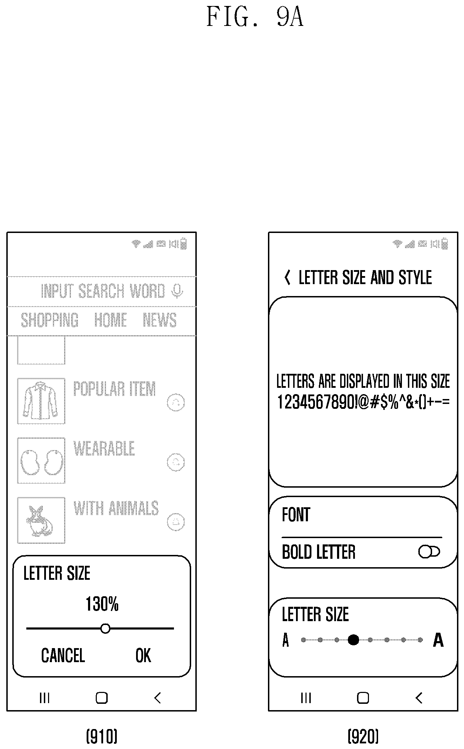

FIG. 9A is a diagram illustrating an example in which an electronic device configures a font size according to an embodiment.

Referring to FIG. 9A, a processor (e.g., the processor 120 in FIG. 1) of an electronic device (e.g., the electronic device 101 in FIG. 1) according to an embodiment may configure the font size of an application executed based on a user input, like a first user interface 910. Alternatively, the processor 120 may configure the font size configured in the electronic device 101, based on the user input, like a second user interface 920.

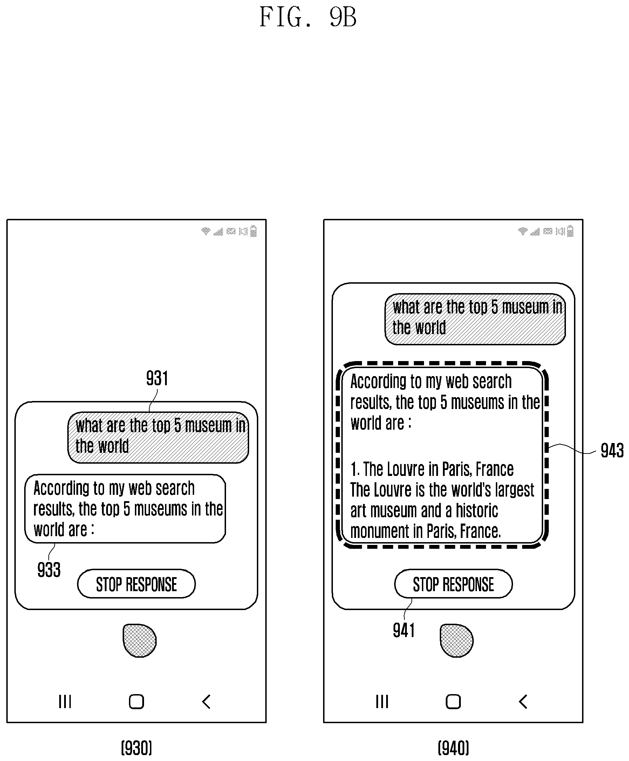

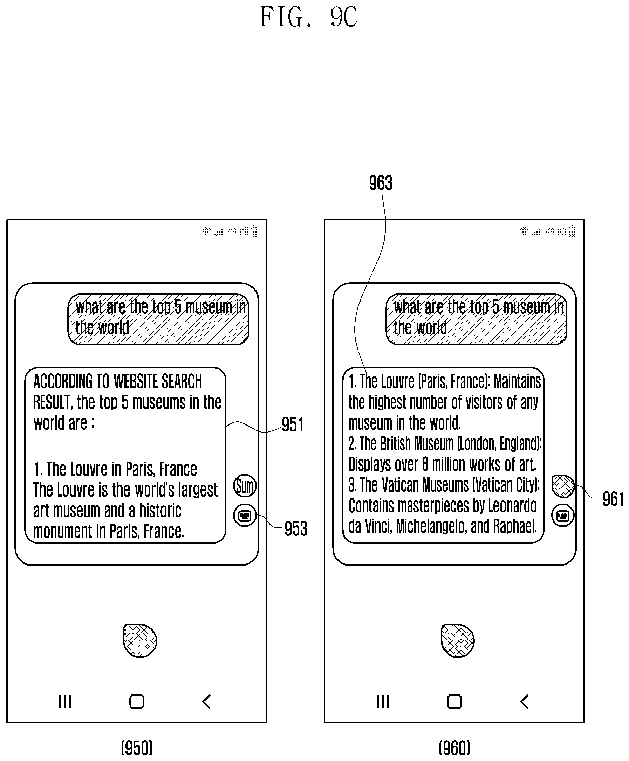

FIGs. 9B and 9C are diagrams illustrating an example in which an electronic device provides summary contents according to an embodiment.

Referring to FIG. 9B, the processor 120 may detect a user input 931 through a voice recognition service and provide a third user interface 930 for providing result data 933, based on the user input 931. For example, in the case of the voice recognition service, the processor 120 may transmit the user input 931 to a voice recognition service server (e.g., the server 108 of FIG. 1 or the generative AI system of FIG. 23) and receive (e.g., stream) the original data corresponding to the user input 931 from the server 108. The processor 120 may perform control to sequentially display text regarding the first result data 933 of the original content while receiving the original content from the server 108. That is, the processor 120 may provide the result data 933 while increasing (or enlarging) an area (e.g., a box area 933) (or a bubble area) for sequentially displaying the result data, rather than displaying the original content all at once.

A fourth user interface 940 indicates that the amount (e.g., text length) of the second result data 943 increases than that of the first result data 933 in the third user interface 930. During displaying of the second result data 943 while the area for displaying the second result data 943 increases in the fourth user interface 940 (e.g., while increasing the amount of result data 943), stop responding 941 may be selected. Even when the stop responding 941 is selected, the processor 120 may continue to stream the original data from the server 108 (e.g., background processing).

Referring to FIG. 9C, when the stop responding 941 is selected, the processor 120 may stop increasing the area for displaying the second result data 943 and provide a fifth user interface 950. The fifth user interface 950 may include the original content 951 and an object 953 for making a request for summary content. For reference, in the fifth user interface 950, the entire content of the original content 951 may not be displayed, and only a part of the original content 951 may be displayed. The entire content of the original content 951 may include a greater amount than that displayed. When the object 953 is selected, the processor 120 may identify the screen size of the area for displaying the second result data 943 and identify the font size of the second result data 943. The processor 120 may determine the length of the text, based on the screen size and/or font size, and may transmit a request for summarizing the original content including the determined length of the text to the server 108. In this case, since there is the original content in the server 108, the processor 120 may not transmit the original content to the server 108. The processor 120 may receive summary content from the server 108.

The processor 120 may provide a sixth user interface 960 including summary content 963 and an object 961 indicating that the summary content. The summary content 963 of the sixth user interface 960 is a summary of the original content, and may be displayed in the area in which the second result data 943 is displayed. According to an embodiment, the processor 120 may display the original content following the summary content 963, based on an input of scrolling (dragging or swiping) the summary content 963 by the user. The processor 120 may display the original content while increasing the size of the area for displaying the summary content 963, based on the user's scroll input.

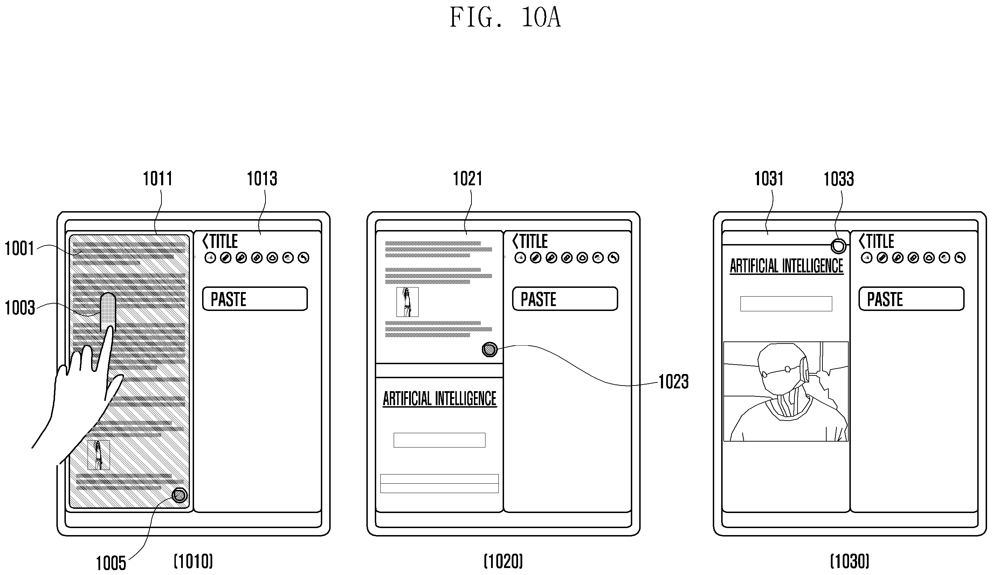

FIG. 10A is a diagram illustrating an example in which an electronic device displays original content and summary content according to an embodiment.

Referring to FIG. 10A, a processor (e.g., the processor 120 in FIG. 1) of an electronic device (e.g., the electronic device 101 in FIG. 1) according to an embodiment may display a first user interface 1010 used as a multi-window on a display (e.g., the display module 160 in FIG. 1). The electronic device 101 may be a foldable electronic device (for example, a device in which two housings are folded based on a folding axis). The first user interface 1010 may include an execution screen of a first application (e.g., a web search application) in a first window 1011 and an execution screen of a second application (e.g., a note application) in a second window 1013. The user may search a webpage and write a note using the search result. When it has been previously configured to provide summary content for the first application, the processor 120 may provide summary content 1001 of the requested content. In addition, the processor 120 may display a first object 1005 indicating that the summary content 1001 is displayed in the execution screen of the first application. The processor 120 may detect a user input 1003 of scrolling the summary content 1001 in a downward direction.

The processor 120 may display a second user interface 1020, based on the user input 1003. The second user interface 1020 may display the original content 1025 following the summary content 1021 by a user input for scrolling in the downward direction. The second user interface 1020 may display a second object 1023 indicating that the summary content 1021 is displayed.

Alternatively, it has not been previously configured to provide summary content for the first application, the processor 120 may provide a third user interface 1030 including the original content 1031 of the requested content. Alternatively, when the second object 1023 is selected in the second user interface 1020, the processor 120 may provide a third user interface 1030. In the third user interface 1030, a third object 1033 indicating that no summary content is displayed may be displayed. The third object 1033 may indicate that the currently displayed content is not summary content, and may be displayed distinguishably from the first object 1005 and the second object 1023.

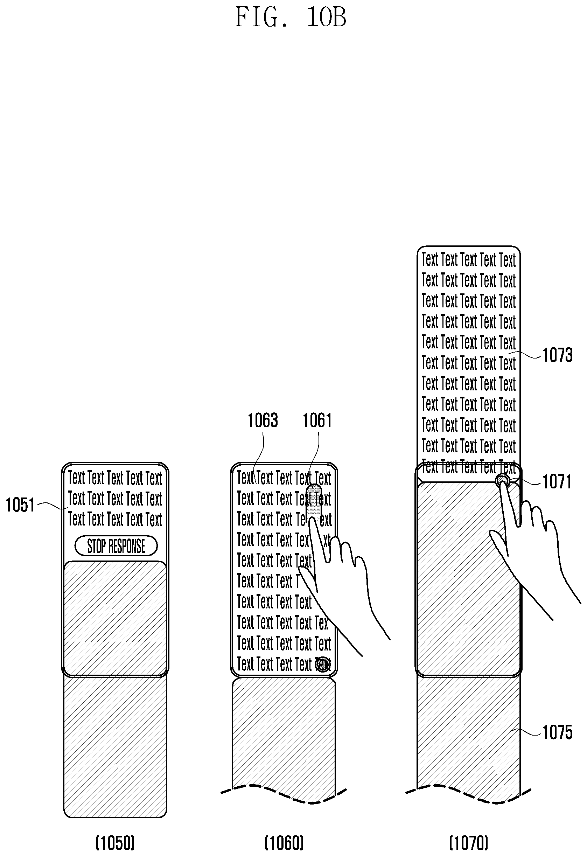

FIG. 10B is a diagram illustrating an example in which an electronic device displays original content and summary content according to an embodiment.

Referring to FIG. 10B, the processor 120 may display a fourth user interface 1050 including summary content 1051 on the display module 160. When it has been previously configured to provide the summary content an application that provides the summary content 1051, the processor 120 may provide the summary content 1051 sequentially from the top when the content is provided. The processor 120 may increase the size of the area for providing summarized content 1063 while sequentially summarizing the original content like a fifth user interface 1060. The processor 120 may detect a user input 1061 of scrolling (dragging or swiping) the summary content 1063. The processor 120 may provide a sixth user interface 1070 in response to the user input 1061. The sixth user interface 1070 may display the original content 1075 following the summary content 1073. That is, in the sixth user interface 1070, the processor 120 may display the original content 1075, not the summary content 1073, on the display module 160. The sixth user interface 1070 may include a fourth object 1071 for making a request for summary content. When a fourth object 1071 is selected, the processor 120 may display the fifth user interface 1060 including the summary content 1061.

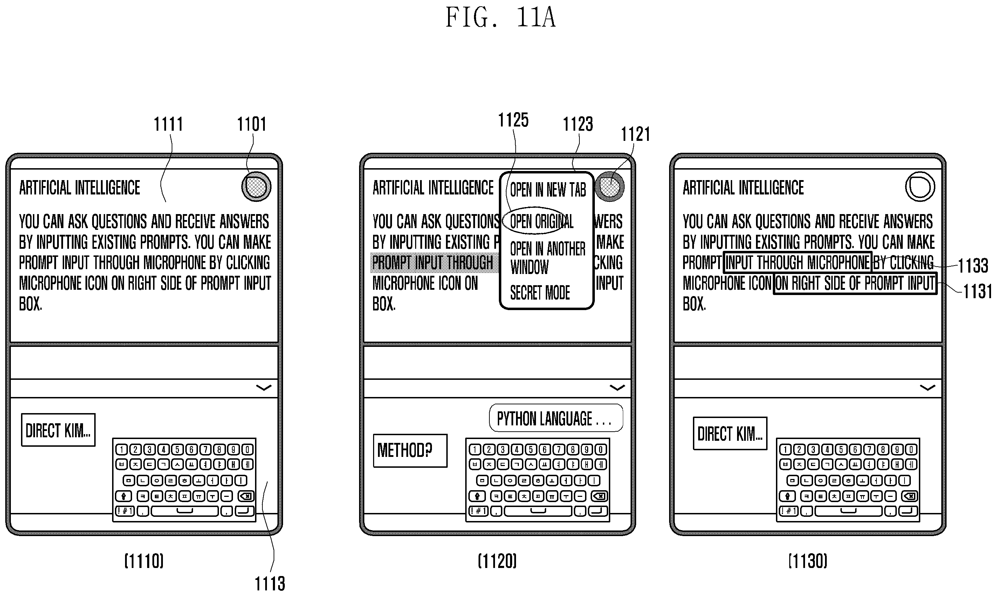

FIG. 11A is a diagram illustrating an example in which an electronic device changes summary content to original content according to an embodiment.

Referring to FIG. 11A, a processor (e.g., the processor 120 in FIG. 1) of an electronic device (e.g., the electronic device 101 of FIG. 1) according to an embodiment may display a first user interface 1110 used as a multi-window on a display (e.g., the display module 160 of FIG. 1). The electronic device 101 may be a foldable electronic device (for example, a device in which two housings are folded based on a folding axis). The first user interface 1110 may include an execution screen of a first application (e.g., a web search application) in a first window 1101, and an execution screen of a second application (e.g., a messenger application) in a second window 1113. The user may perform a web search to obtain necessary information while exchanging messages with a counterparty. When it has been previously configured to provide summary content for the first application, the processor 120 may provide the summary content of the requested content. In addition, the processor 120 may display a first object 1101 indicating that the summary content is displayed on the execution screen of the first application.

According to an embodiment, when the electronic device 101 is a foldable electronic device, the foldable electronic device may display an execution screen of a first application (e.g., a web search application) in a first display area (e.g., the first window 1101) corresponding to a first housing, and display an execution screen of a second application (e.g., a messenger application) in a second display area (e.g., the second window 1113) corresponding to a second housing in a state (e.g., an intermediate state) in which the first housing and the second housing, which are disposed on both sides with reference to a folding axis and formed to be folded with respect to each other, are disposed at a predetermined angle. For example, the intermediate state of the foldable electronic device may be a state in which the first housing and the second housing are placed in an "L" (or " 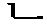 ") shape and the second housing is placed on the ground surface (e.g., a desk), and the first housing forms a predetermined angle (e.g., 50 degrees to 130 degrees) with the ground surface.

Referring to a second user interface 1120, when a partial area 1121 is selected in the summary content (e.g., pressed and held), the processor 120 may provide a pop-up window 1123. The pop-up window 1123 may include open the original 1125, and, when the open original 1125 is selected, the processor 120 may display the third user interface 1130. The third user interface 1130 may display areas 1131 and 1133 corresponding to the selected partial area 1121 in the original content to be distinguished from other areas.

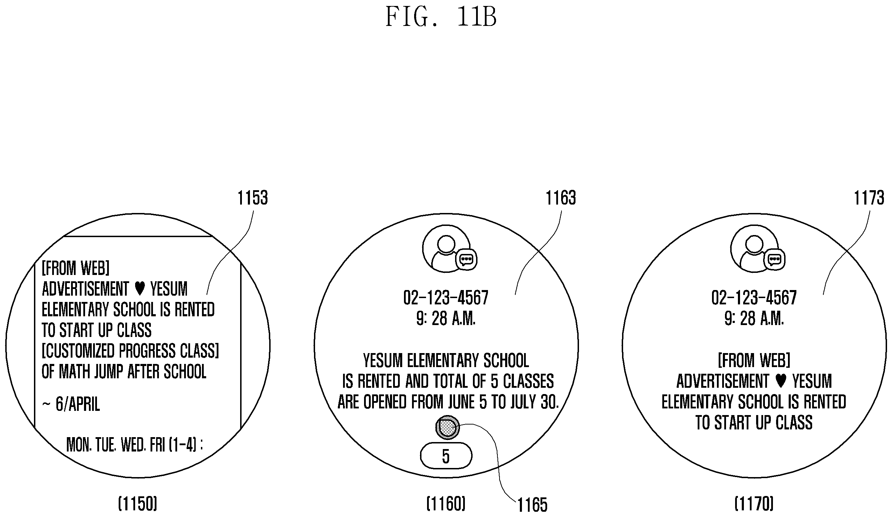

FIG. 11B is a diagram illustrating an example in which an electronic device compares summary content with original content according to an embodiment.

Referring to FIG. 11B, the electronic device 101 may be a wearable device (e.g., a watch-type device). First reference numeral 1150 may include original content 1153. The fourth user interface 1160 may include summary content 1163. The processor 120 may generate summary content 1163 by summarizing the original content 1153 by itself or through the server 108. The fifth user interface 1170 may include a message 1173 provided according to the size of the display in the related art. The message 1173 may be difficult to fully grasp the entire content in accordance with information being displayed from the top of the original content 1153. In comparison between the summary content 1163 and the message 1173, the summary content 1163 may show only a summary of important information after deleting unnecessary information (e.g., advertisement). When an object 1165 indicating that the summary content is selected in the fourth user interface 1160 or a scroll input is detected on the summary content 1163, the processor 120 may display the original content 1153 instead of the summary content 1163.

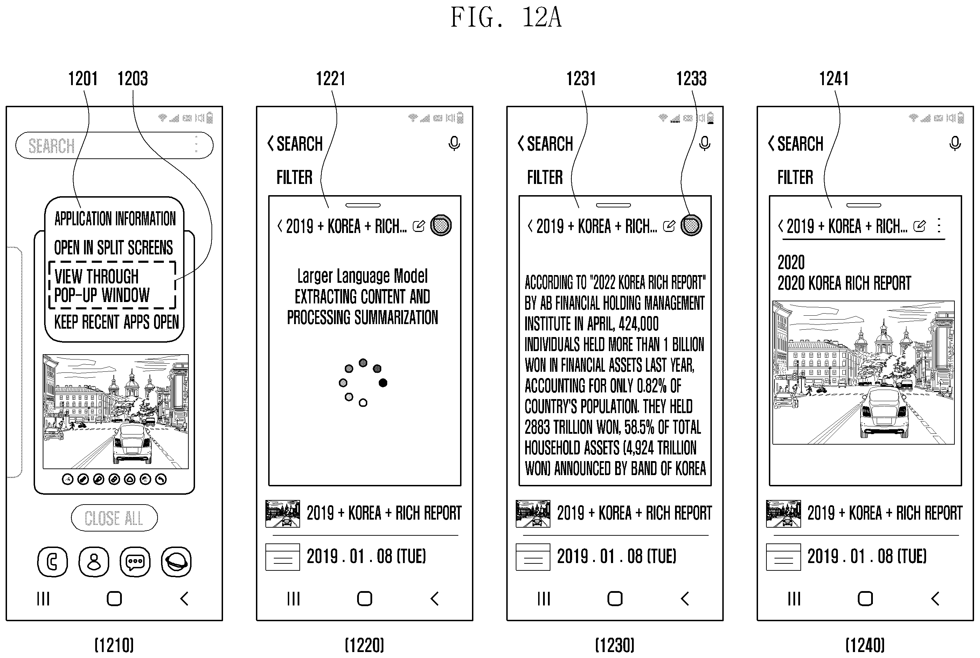

FIG. 12A is a diagram illustrating an example in which an electronic device changes and displays summary content to original content, according to an embodiment.

Referring to FIG. 12A, when a processor (e.g., the processor 120 in FIG. 1) of an electronic device (e.g., the electronic device 101 in FIG. 1) selects a recently executed application list after opening content (e.g., a document file), a menu item such as application information 1201 and view through pop-up window 1203 may be displayed like a first user interface 1210. When the view through pop-up window 1203 is selected, the processor 120 may determine that the user has an intention to reduce the amount of original content and provide a second user interface 1220. The second user interface 1220 may include notification information 1221 indicating that summary content is generated (or acquired). The processor 120 may identify a screen size and/or a font size for displaying requested content while displaying the second user interface 1220, determine the length of the text, based on the identified screen size and/or font size, and acquire (e.g., generate or receive) summary content, based on the length of the text.

When acquisition of the summary content is completed, the processor 120 may display a third user interface 1230 including the summary content 1231 and an object 1233 indicating the summary content 1231.

Alternatively, when a user input of scrolling the notification information 1221 is detected while the second user interface 1220 is displayed, the processor 120 may stop generating the summary content and display a fourth user interface 1240 including the original content 1241.

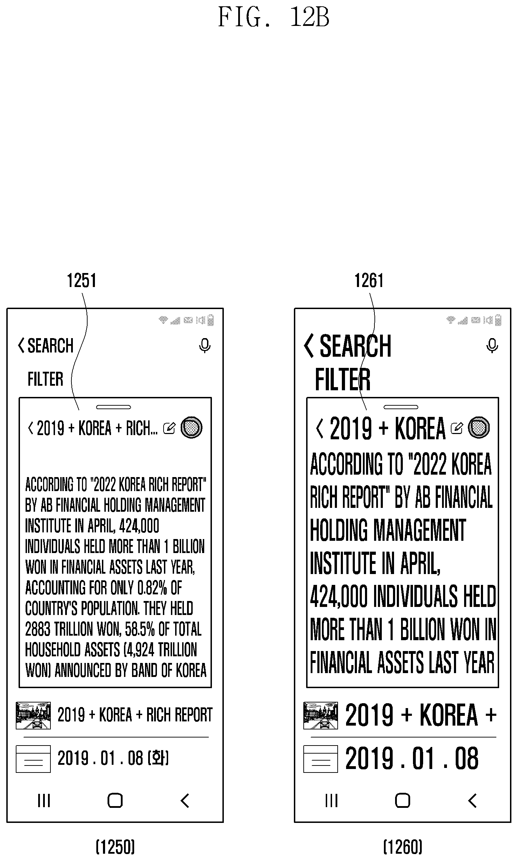

FIG. 12B is a diagram illustrating an example in which an electronic device displays summary contents differently according to font sizes according to an embodiment.

Referring to FIG. 12B, the processor 120 may display a fifth user interface 1250 or a sixth user interface 1260 according to the font size. When generating summary content from the same original content, the processor 120 may generate different summary content in the case that the screen sizes are the same but the font sizes are different. The content or lengths of the text in the first summary content 1251 included in the fifth user interface 1250 and the second summary content 1261 included in the sixth user interface 1260 may be different. For example, when the font size is "90% (or 7)" when the fifth user interface 1250 is provided and when the font size is "120% (or 12)" when the sixth user interface 1260 is provided, the length of the text of the second summary content 1261 may be 80 if the length of the text of the first summary content 1251 is 100. The processor 120 may further reduce the amount of the content in consideration of the font size configured in the electronic device 101. These numerical values are merely to help the understanding of the disclosure, and are not intended to limit the disclosure.

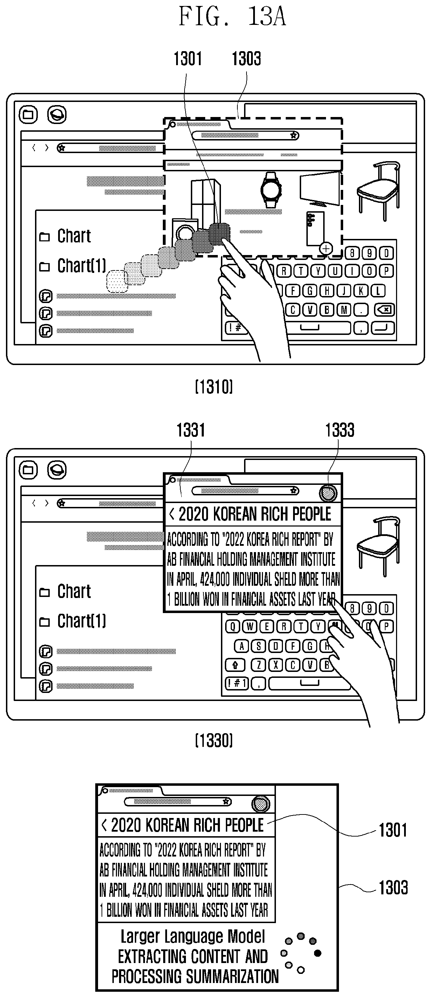

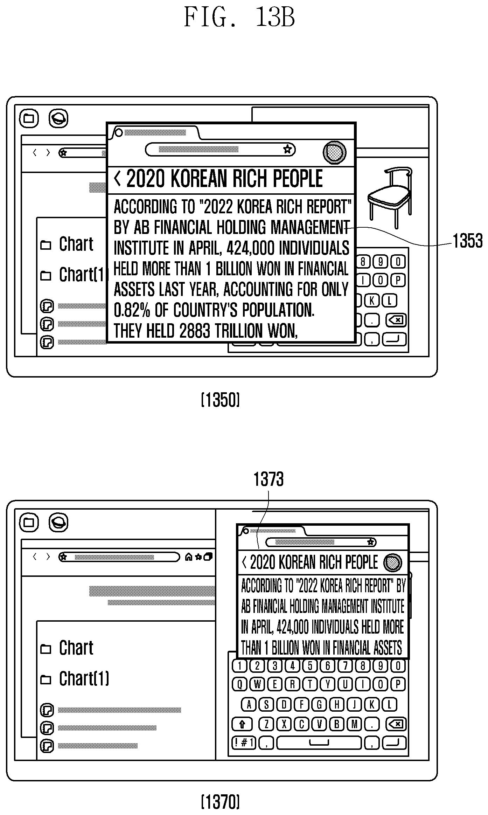

FIGs. 13A and 13B are diagrams illustrating an example in which an electronic device differently displays summary content according to a screen size according to an embodiment.

Referring to FIGs. 13A and 13B, a processor (e.g., the processor 120 in FIG. 1) of an electronic device (e.g., the electronic device 101 in FIG. 1) according to an embodiment may detect a user input 1301 of dragging and dropping a document to be opened to a first screen area 1301, like a first user interface 1310. The processor 120 may identify the size of the first screen area 1301, and identify a font size (e.g., a font size configured for the electronic device 101 or a font size of the document application). The processor 120 may determine the length of the text, based on the size and/or font size of the first screen area 1301, and acquire summary content, based on the determined length of the text.

A second user interface 1330 may display first summary content 1331 and include an object 1333 indicating the first summary content 1331. The user may change the size of the first screen area 1301 displaying the summary content 1331. For example, the size of the first screen region 1301 may be changed to the size of a second screen area 1303. The processor 120 may reconfigure the summary content, based on the size of the second screen area 1303. Alternatively, the processor 120 may redetermine the length of the text, based on the size of the second screen area 1303 and/or font size, and obtain summary content, based on the determined length of the text.

A third user interface 1350 may indicate that the second summary content 1353 is displayed in the second screen area 1303. Alternatively, the size of the first screen area 1301 may be changed to the size of a third screen area. A fourth user interface 1370 may indicate that third summary content 1373 is displayed in the third screen area. The size of the third screen area may be different from the size of the first screen area 1301 or the size of the second screen area 1303. Therefore, the content of the text (or the length of the text) included in the first summary content 1331, the second summary content 1353, or the third summary content 1373, which have different screen areas, may be different from each other. When the screen area is changed, the processor 120 may reconfigure the summary content according to the changed screen area.

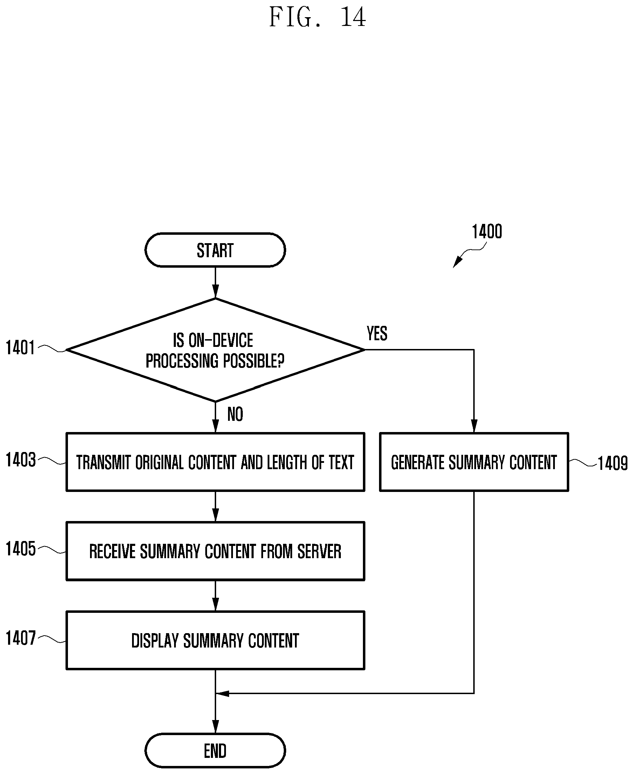

FIG. 14 is a flowchart 1400 illustrating a method by which an electronic device obtains summary content according to an embodiment.

Referring to FIG. 14, in operation 1401, a processor (e.g., the processor 120 in FIG. 1) of an electronic device (e.g., the electronic device 101 in FIG. 1) according to an embodiment may determine whether on-device processing is possible. For example, the processor 120 may include an LLM management module, search for a small LM, and when there is a supported small LM using the LLM management module, determine that on-device processing is possible. The small LM may learn about domains and functions for generating summary content, so as to generate summary content. The processor 120 may perform operation 1409 when on-device processing is possible, and may perform operation 1403 when on-device processing is not possible.

When on-device processing is not possible, in operation 1403, the processor 120 may transmit the length of the text and the original content to an LLM server (e.g., the server 108 in FIG. 1). The processor 120 may transmit the original content itself to the server 108, or transmit information (e.g., a URL) for the server 108 to acquire the original content to the server 108. When an image is included in the original content associated with the summary content, the processor 120 may transmit the size of the image associated with the summary content or the number of images to the server 108 together with the length of the text. When there is no small LM for generating summary content, the processor 120 may determine that on-device processing is not possible and make a request for the summary content to the server 108.

In operation 1405, the processor 120 may receive the summary content from the server 108. The server 108 may generate the summary content, based on the length of the text and the original content, and transmit the generated summary content to the electronic device 101. The processor 120 may receive the summary content through a communication module (e.g., the communication module 190 in FIG. 1).

In operation 1407, the processor 120 may display the summary content. The summary content may be a summary of the original content to match a predetermined screen size. The processor 120 may display the summary content on the screen for displaying the requested content. According to an embodiment, when the original content of the requested content is less than or equal to a predetermined reference of the screen size, the processor 120 may display the original content on the requested screen.

When on-device processing is possible, in operation 1409, the processor 120 may generate summary content. The processor 120 may generate the summary content, based on the length of the text and the original content through the searched small LM. When the summary content has been completely generated, the processor 120 may perform operation 1407 to display the generated summary content.

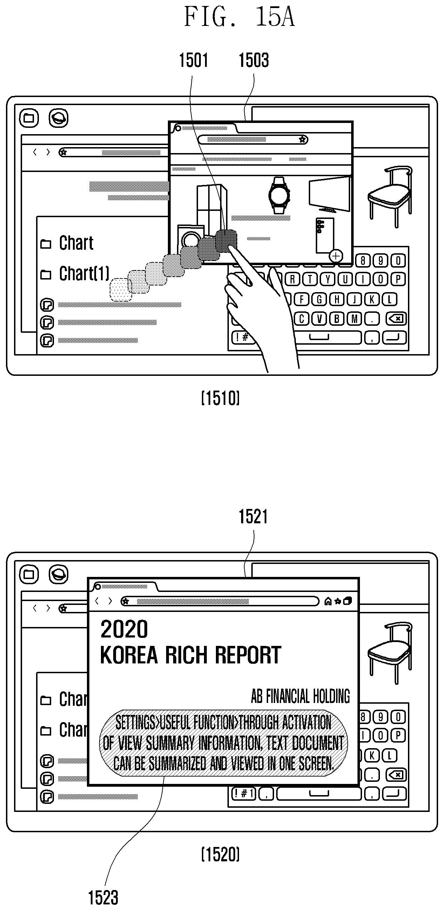

FIG. 15A is a diagram illustrating an example in which an electronic device notifies of displaying of summary content according to an embodiment.

Referring to FIG. 15A, a processor (e.g., the processor 120 in FIG. 1) of an electronic device (e.g., the electronic device 101 in FIG. 1) according to an embodiment may detect a user input 1501 of dragging and dropping a document to be opened to a first screen area 1503, like a first user interface 1510. The user may change the size of an area for displaying the document for a better view of the document. For example, when the user changes the first screen area to a second screen area 1521 like a second user interface 1520, the processor 120 may display a notification message 1523. The notification message 1523 may notify the user that the summary content of the original content (e.g., the document) may be viewed when the configuration is changed.

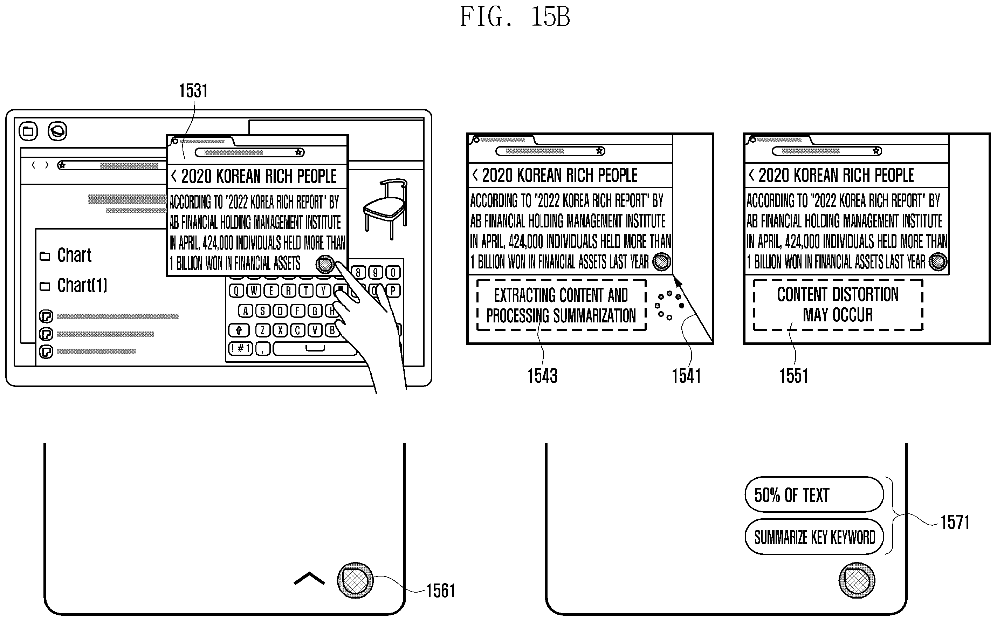

FIG. 15B is a diagram illustrating an example in which an electronic device notifies of displaying of summary content according to an embodiment.

Referring to FIG. 15B, the processor 120 may detect a user input of changing a screen area for displaying the summary content 1531 while displaying the summary content 1531. For example, the user may perform a drag input 1541 of reducing the first screen region 1503 to be smaller. In response to the user input of changing the screen area, the processor 120 may display a first message 1543 indicating that summary content is being generated. The processor 120 may generate summary content while displaying the first message 1543, and determine whether the screen size for displaying the summary content is equal to or less than the minimum reference value. When the screen size for displaying the summary content is equal to or less than the minimum reference value, the processor 120 may provide a warning display and display a second message 1551 indicating that the content may be distorted. When the text content exceeds N% of the screen in a state in which provision of the summary content is on (for example, activated), the processor 120 may provide an object 1561 indicating the summary content through a floating button. Alternatively, the processor 120 may display information 1571 associated with the summary content. The information 1571 is about a meta prompt, which is the reference of the summary content, and the user may edit or delete the meta-prompt, which is the reference of the summary content.

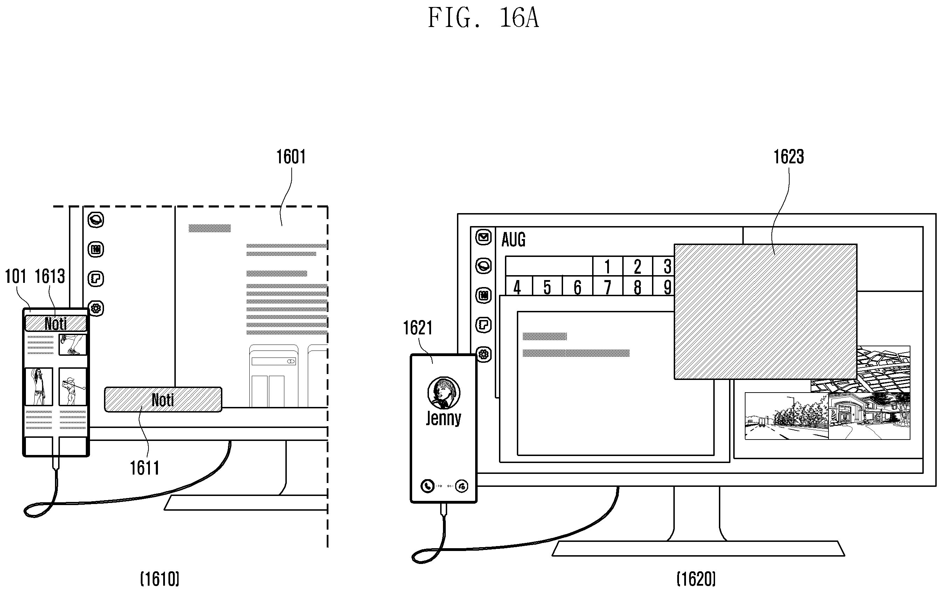

FIG. 16A is a diagram illustrating an example in which an electronic device displays summary content in a state of being connected to another electronic device according to an embodiment.

Referring to FIG. 16A, an electronic device (e.g., the electronic device 101 in FIG. 1) according to an embodiment may be used while being connected to another electronic device 1601. The other electronic device 1601 may be a device (e.g., a computer or a laptop) including a display of a larger size than the electronic device 101. The electronic device 101 may receive a message in a state 1610 in which the electronic device is connected to the other electronic device 1601. The electronic device 101 may notify that a received message exists as indicated by reference numeral 1613, and the other electronic device 1601 may notify that a received message exists as indicated by reference numeral 1611. When the user identifies the notification from the other electronic device 1601 instead of the electronic device 101, the other electronic device 1601 may identify the size and/or font size of a screen 1623 for displaying the notification, and may provide summary content on the identified screen 1623 as in a second example 1620.

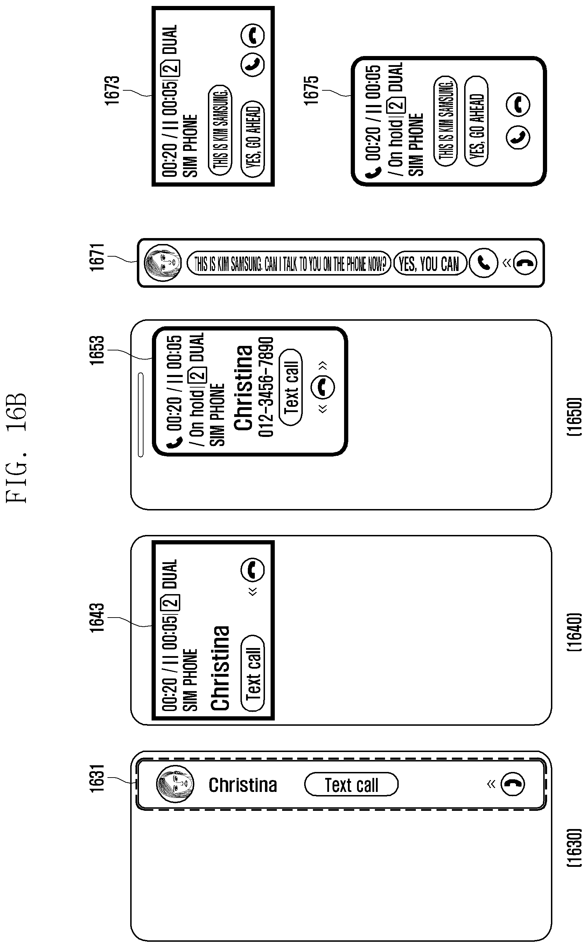

FIG. 16B is a diagram illustrating an example in which an electronic device displays summary content depending on a screen size according to an embodiment.

Referring to FIG. 16B, a case (or cover) is mounted on the electronic device 101, and only a partial area of a display (e.g., the display module 160 in FIG. 1) of the electronic device 101 may be activated by the case. For example, the electronic device may activate only a first area 1631 of the display module 160, as in a first example 1630. In this case, the electronic device 101 may provide first summary content 1671, based on the size and/or font size of the first area 1631. The electronic device may activate only a second area 1643 of the display module 160, as in a second example 1640. In this case, the electronic device 101 may provide second summary content 1673, based on the size and/or font size of the second area 1643. The electronic device may activate only a third area 1653 of the display module 160, as in a third example 1650. In this case, the electronic device 101 may provide third summary content 1675, based on the size and/or font size of the third area 1653. The first summary content 1671, the second summary content 1673, and the third summary content 1675 summarized for the same original content may differ in the amount, size, or length of text or images (e.g., icons) included in the first summary content 1671, the second summary content 1673, and the third summary content 1675.

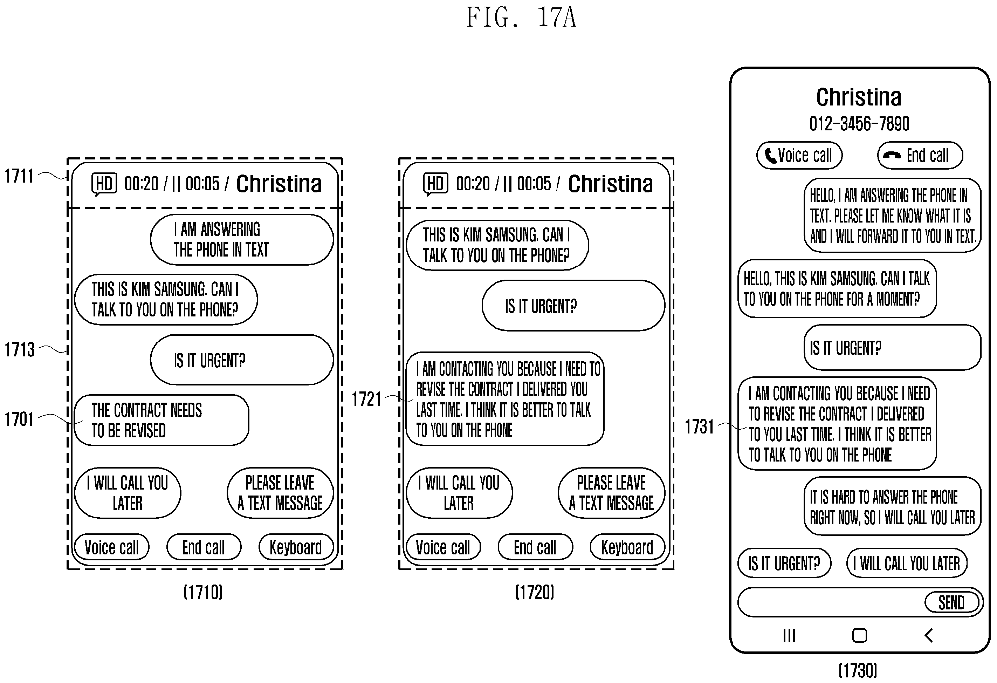

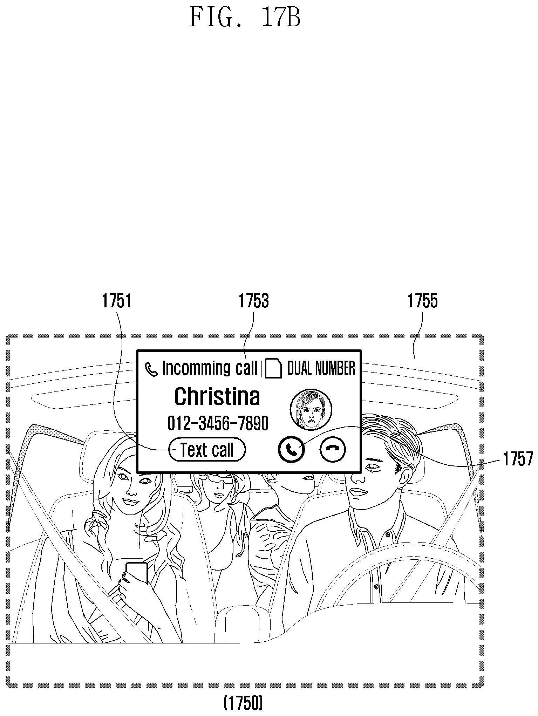

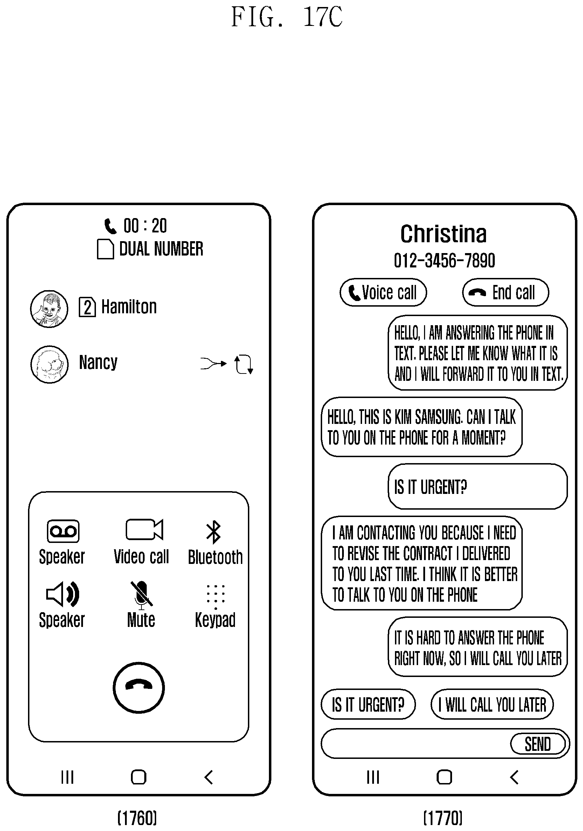

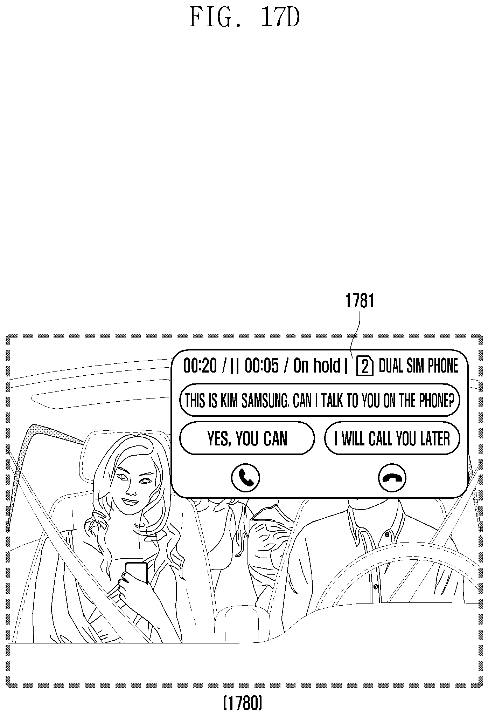

FIGs. 17A to 17D are diagrams illustrating an example in which an electronic device displays summary content depending on the size of an area in an application according to an embodiment.

Referring to FIGs. 17A to 17D, a processor (e.g., the processor 120 in FIG. 1) of an electronic device (e.g., the electronic device 101 in FIG. 1) according to an embodiment may divide an execution screen of an application into areas for displaying phone call information 1711 and message information 1713. A first user interface 1710 to a third user interface 1730 may be execution screens of an application associated with a text phone call. The processor 120 may identify one area included in the message information 1713 as a screen area to display the summary content 1701 in the first user interface 1710. The first user interface 1710 may include the summary content 1701, and the second user interface 1720 may include the original content 1721. The processor 120 may display the summary content 1701 obtained by summarizing the original content 1721, based on the identified screen area. When the execution screen of the application associated with the text phone call is displayed on the large display, the original content 1731 may be displayed like the third user interface 1730.

The processor 120 may provide the summary content through a pop-up window in the execution screen of the application. For example, referring to a fourth user interface 1750, a phone call may be received while an execution screen 1755 of a video application is displayed. The processor 120 may generate summary content, based on the size of a predetermined pop-up window and/or the font size. The processor 120 may display the summary content 1753 associated with the phone call on the execution screen 1755 of the video application. The summary content 1753 may include an image (e.g., an icon) related to a text phone call 1751, a phone receiving 1757, or a phone rejection, in addition to information on the person who made the phone call.

Conventionally, when the phone call receiving 1759 is selected in the fourth user interface 1750, the processor 120 may display an execution screen 1760 of a phone application on the display of the electronic device 101. That is, the processor 120 may switch from the execution screen 1755 of the video application to the execution screen 1760 of the phone call application. Alternatively, when the text phone call 1751 is selected in the fourth user interface 1750, the processor 120 may display an execution screen 1770 of a text phone call application on the display of the electronic device 101. That is, the processor 120 may switch from the execution screen 1755 of the video application to the execution screen 1770 of the text phone call application.

In the disclosure, when the text phone call 1751 is selected in the fourth user interface 1750, the processor 120 may provide summary content in a state of displaying the execution screen of the video application. For example, summary content 1781 related to the text phone call may be displayed on the execution screen of the video application, like a fifth user interface 1780. The processor 120 may generate and display the summary content 1781 related to the text phone call, based on the size of the defined pop-up window and/or font size.

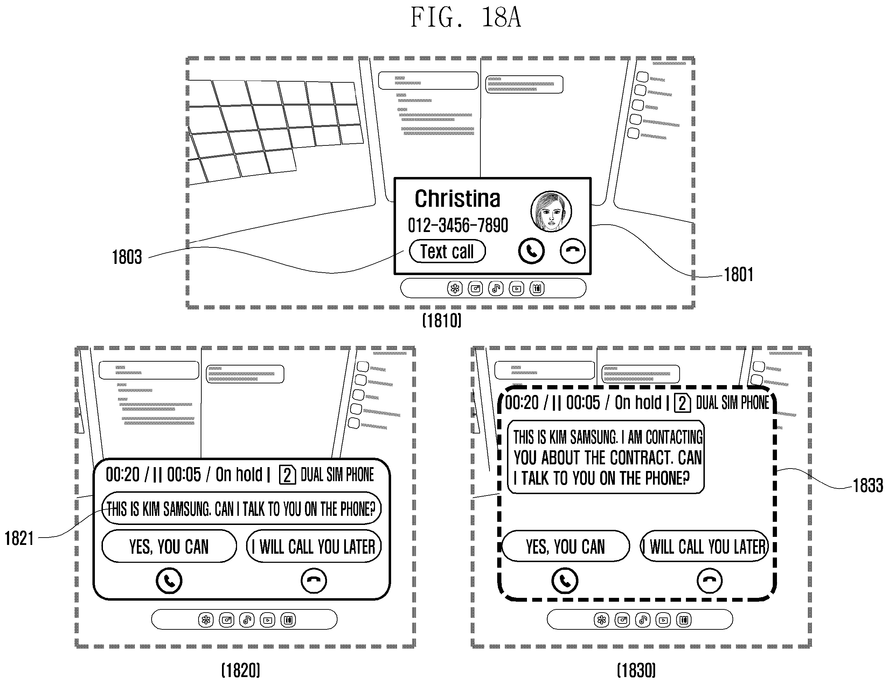

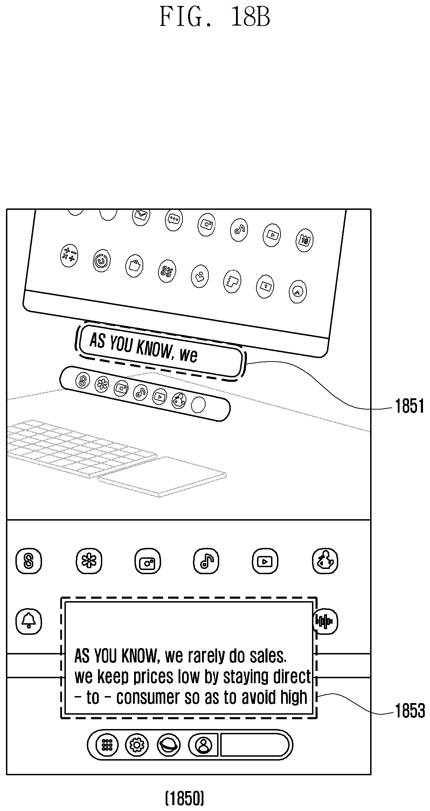

FIGs. 18A and FIG. 18B are diagrams illustrating an example in which an electronic device displays summary content depending on a screen size according to an embodiment.

Referring to FIGs. 18A and 18B, as indicated by reference numeral 1810, a processor (e.g., the processor 120 in FIG. 1) of an electronic device (e.g., the electronic device 101 in FIG. 1) according to an embodiment may notify that a phone call has come in through a pop-up window 1801 on a virtual space. The processor 120 may identify the screen size of the pop-up window 1801 and/or the font size. When a text phone call 1803 is selected by the user, the processor 120 may determine the length of the text, based on the identified screen size and/or font size, and obtain summary content, based on the determined text length. As indicated by second reference numeral 1820, the processor 120 may provide summary content 1821 on a first screen. The user may change the size of the first screen. As indicated by third reference numeral 1830, when the screen size is changed, the processor 120 may provide original content 1833 in accordance with the changed screen 1831 (for example, a second screen) size. That is, since the second screen has a larger size than the first screen and can display the original content, the processor 120 may display the original content 1833 instead of the summary content 1821.

Alternatively, as indicated by fourth reference numeral 1850, when displaying text to speech information, such as a live caption, the processor 120 may shorten and provide content of the original content according to the size of a predetermined window. For example, since the size of the first screen 1851 is smaller than the size of the second screen 1853, the processor 120 may more shorten and display the content of the original content.

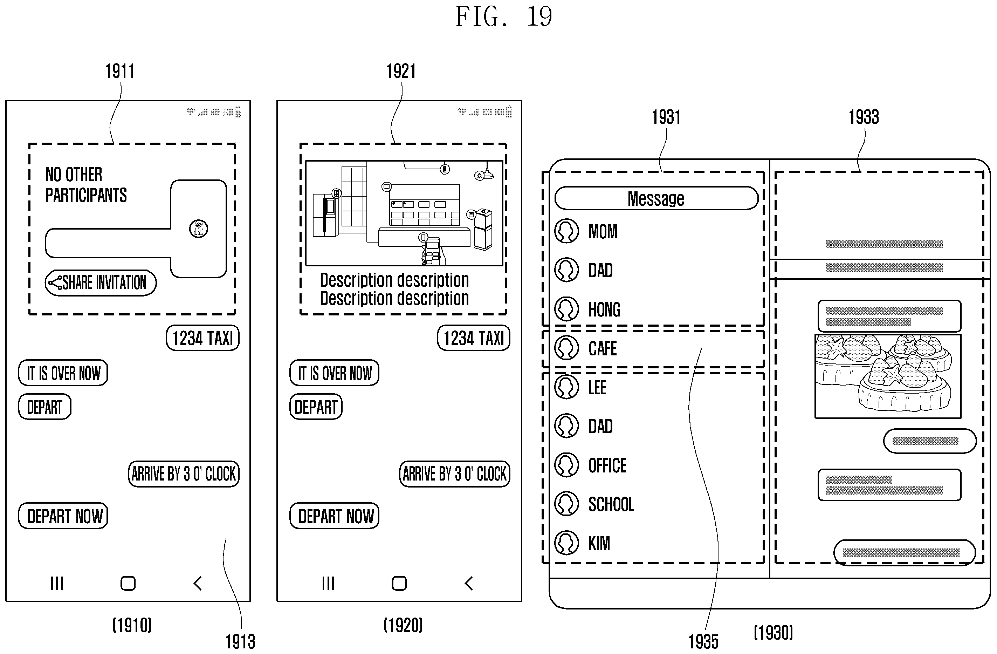

FIG. 19 is a diagram illustrating an example in which an electronic device displays summary content depending on a screen size according to an embodiment.

Referring to FIG. 19, a processor (e.g., the processor 120 in FIG. 1) of an electronic device (e.g., the electronic device 101 in FIG. 1) according to an embodiment may configure a screen size to be smaller in a first user interface 1910 through a split screen or a pop-up screen according to a user input. In the first user interface 1910, a first window 1911 may display an execution screen of a video application and a second window 1913 may display an execution screen of a message application. When a request for summary content is made in the execution screen of the video application displayed in the first window 1911, the processor 120 may provide a second user interface 1920. When the summary content is text, the processor 120 may summarize display the speech to text information in a text displayable area 1921 excluding an image display area in the first window 1911. Alternatively, the processor 120 may display the summary content in a partial area 1935, in which the request for displaying the summary content is made, within a message list area 1931 among the message list area 1931 and a message content area 1933, like a third user interface 1930.

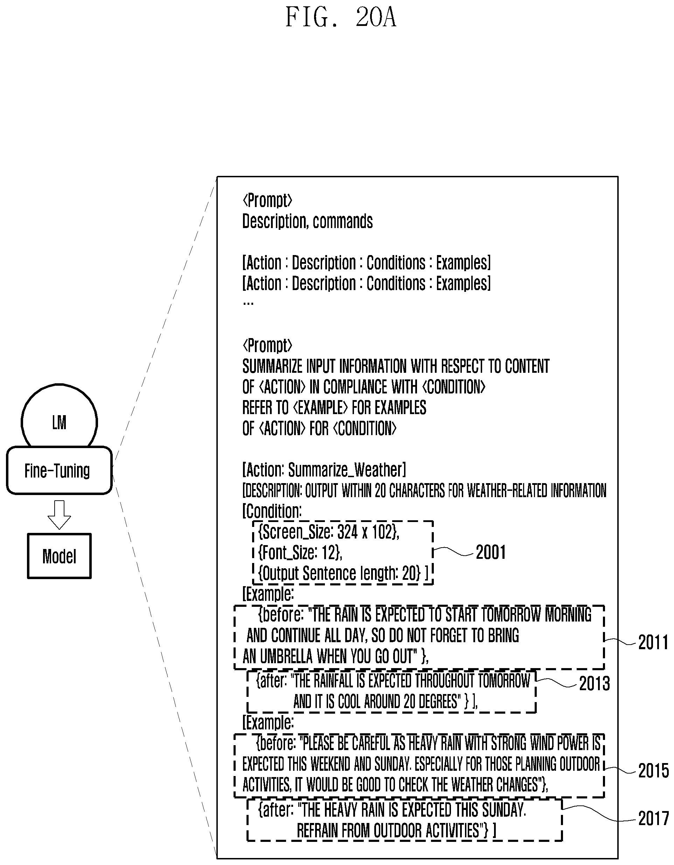

FIG. 20A is a diagram illustrating an example of a prompt related to the generation of summary content in an electronic device according to an embodiment.

Referring to FIG. 20A, a processor (e.g., the processor 120 in FIG. 1) of an electronic device (e.g., the electronic device 101 in FIG. 1) according to an embodiment may train a language model to generate prompt data 2010 which is the reference of summary content. For example, the processor 120 may generate the length (e.g., 20) of the text, based on the screen size (e.g., 324*102) and font size (e.g., 12) to display the requested content. The processor 120 may generate condition information 2001 including at least one of the screen size, the font size, or the text length. The processor 120 may train the condition information 2001, the first summary content 1213 corresponding to first original content 2011, and the second summary content 1217 corresponding to second original content 2015.

The processor 120 may be trained, through the prompt data 2010, that the original data becomes the summary data in accordance with the length of output characters in the provided display information and acquire summary data (e.g., summary content) only with the condition information and the original data (e.g., original content). Alternatively, the processor 120 may be trained that the summary data is to be adjusted in accordance with the provided output character length through the prompt data 2010. The processor 120 may calculate length of available output characters (e.g., text length) by calculating a screen size, a font size, and the number of display output lines, transmit the text length and the original data to a server (e.g., the server 108 in FIG. 1), and receive summary content from the server 108.

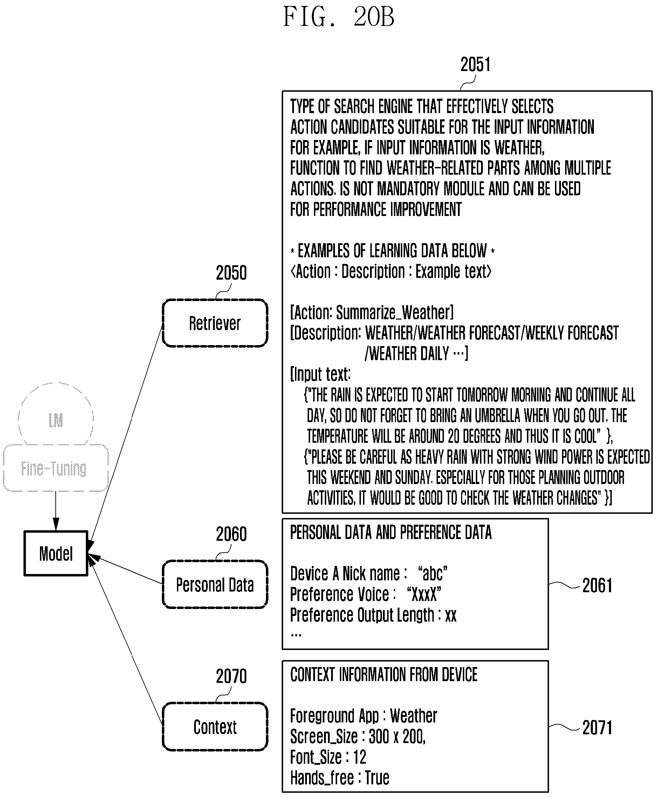

FIG. 20B is a diagram illustrating an example in which an electronic device trains a model for generating summary content according to an embodiment.

Referring to FIG. 20B, the processor 120 may cause a first small LM 2050 to learn first information 2051, cause a second small LM 2060 to learn second information 2061, and cause a third small LM 2007 to learn third information 2071. The first small LM 2050 may be used as a search engine, the second small LM 2060 may be used to use personal information and preference information, and the third small LM 2007 may be used to use context information of the electronic device 101.

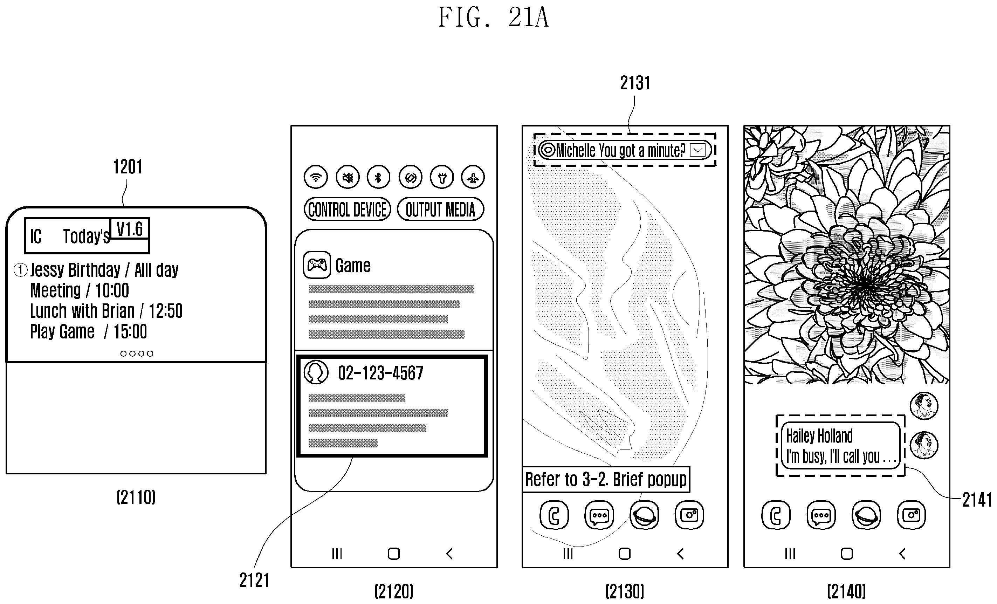

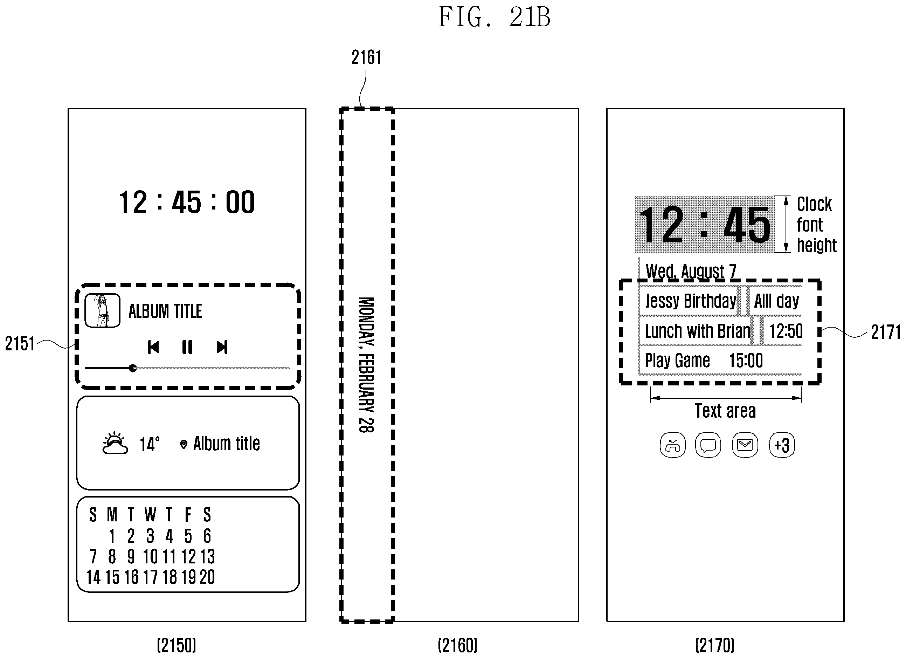

FIGs. 21A and 21B are diagrams illustrating an example of the size of a screen for displaying summary content in an electronic device according to an embodiment.

Referring to FIG. 21A, in a first example 2110, a case may be mounted on an electronic device (e.g., the electronic device 101 in FIG. 1), and only a partial display area of a display (e.g., the display module 160 in FIG. 1) included in the electronic device 101 may be activated by the case. The electronic device 101 may display the summary content, based on the size of the activated display area 1201 and/or the font size. For example, when the summary content is schedule information, the electronic device 101 may provide time and title as the summary content if there are three schedules, and may provide more detailed schedule information as the summary content if there is one schedule. A second example 2120 may be providing a first information (or notification) item 2121 of the electronic device 101 as summary content. A third example 2130 may be providing, as summary content, a second information item 2131 with a smaller size than the first information item 2121. A fourth example 2140 may be providing a third information item 2141 of the electronic device 101 as summary content. The screen sizes and font sizes of the first information item 2121, the second information item 2131, and the third information item 2141 may be different. When the screen sizes and/or font sizes are different, the summary content displayed in the first information item 2121, the second information item 2131, and the third information item 2141 may be different with respect to the same content.

Referring to FIG. 21B, a fifth example 2150 may be providing a fifth information item 2151 of the electronic device 101 as summary content. A sixth example 2160 may be providing a sixth information item 2161 through an edge area of the electronic device 101 as summary content. A seventh example 2170 may be providing a seventh information item 2171 through a predetermined area of the electronic device 101 as summary content. The screen sizes and font sizes of fifth information item 2151, the sixth information item 2161, and the seventh information item 2171 may be different. When the screen sizes and/or font sizes are different, the summary content displayed in the fifth information item 2151, sixth information item 2161, and seventh information item 2171 may be different with respect to the same content.

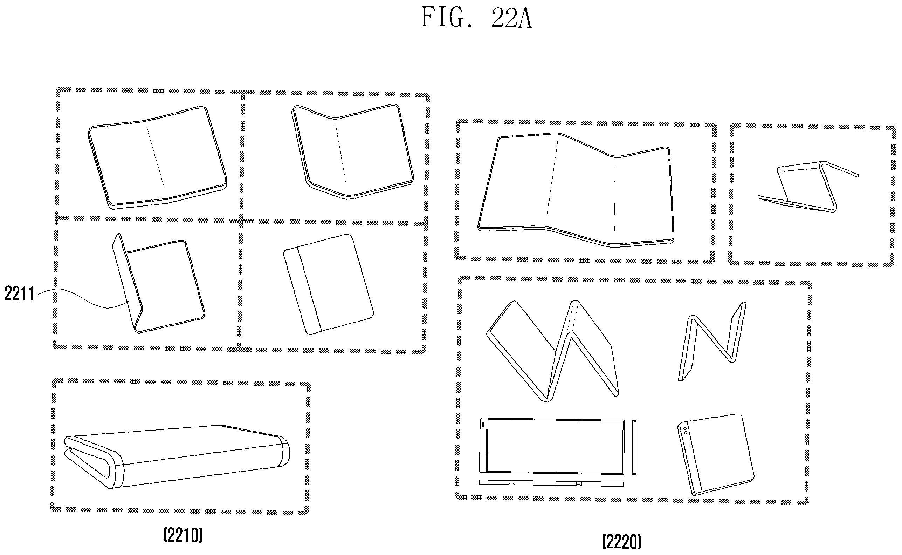

FIGs. 22A to 22C are diagrams illustrating an example of an electronic device having various screen sizes according to an embodiment.

Referring to FIG. 22A, an electronic device (e.g., the electronic device 101 in FIG. 1) according to an embodiment may be implemented as a first foldable electronic device 2210 or a second foldable electronic device 2220 having different display sizes. The first foldable electronic device 2210 may be an electronic device that is folded at least once through in-folding or out-folding. In a state in which the first foldable electronic device 2210 is in a folded state, when summary content is displayed only in a partial display area and then a screen area for displaying the summary content is changed according to a user input, content of the summary content may be enlarged and displayed in accordance with the changed screen size.

According to an embodiment, in a state 2211 (e.g., an intermediate state) in which a first housing and a second housing are disposed on both sides with respect to the folding axis at a predetermined angle, the first foldable electronic device 2210 may display an application execution screen (e.g., YouTube) in a first display area (e.g., the top of the screen) corresponding to the first housing and display summary information in a second display area (e.g., the bottom of the screen) corresponding to the second housing.

The second foldable electronic device 2220 is an electronic device folded at least twice, and a main display thereof may be larger than a main display of the first foldable electronic device 2210. The first foldable electronic device 2210 or the second foldable electronic device 2220 may change and display the amount of summary content to according to a physical change in the size of the display.

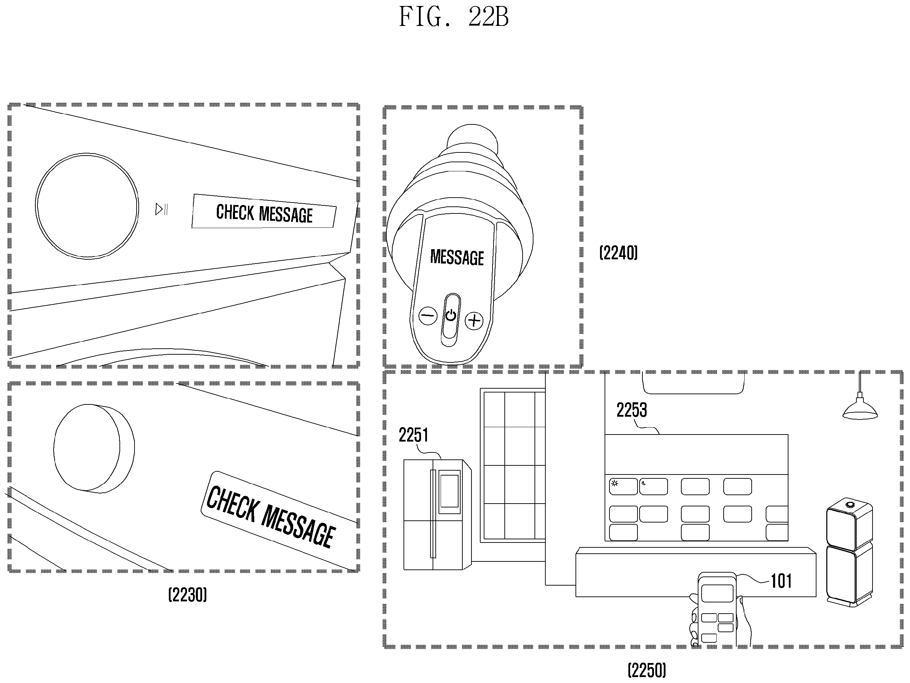

Referring to FIG. 22B, the electronic device 101 may be implemented in the form of a washing machine 2230, a vacuum cleaner 2240, and the like. The washer 2230 or vacuum cleaner 2240 may include a smaller display than a device such as a smartphone. The washing machine 2230 or the vacuum cleaner 2240 may display content different from that of the smartphone with respect to the same summary content. Alternatively, the electronic device 101 may be used as a home appliance (e.g., a refrigerator 2253 or a TV 2251) as indicated by first reference numeral 2250. Through the refrigerator 2253, the TV 2251, or a device having various screens, the summary content may be displayed.

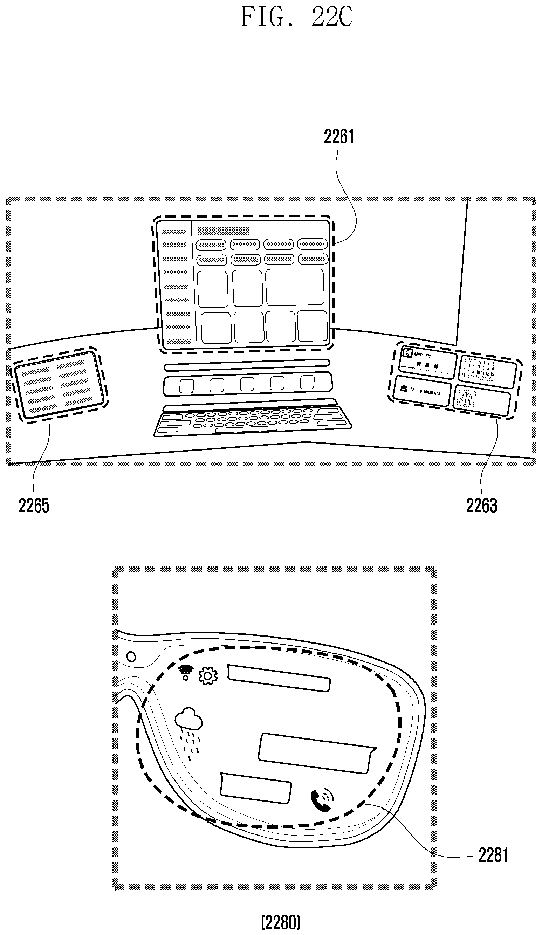

Referring to FIG. 22C, as in a first example 2260, the summary content may be displayed differently according to a first screen size 2261, a second screen size 2263, and a third screen size 2265. Alternatively, the summary content may be displayed in a size that matches a lens 2281 of the wearable device 2280. The summary content may be displayed in the entire screen of the lens 2281 or a partial area of the lens 2281.

FIG. 23 is a block diagram illustrating an example of a generative artificial intelligence system according to an embodiment.

Referring to FIG. 23, a generative artificial intelligence system (e.g., an intelligent server or the server 108 in FIG. 1) according to an embodiment may include a user interface 2310, a database 2320, application and service components 2330, an AI framework 250, and a generative AI model 2370.

The user interface 2310 may receive an input of a user query. The user query may have the form of natural language, images, and videos. In addition, when the user makes a query, context information may be transmitted together. As another example, the user query can be an unnatural input that does not generate natural language such as a design request or a modification. In addition, a mixed form of the above-described natural language, image, sound, and context information is also possible. Moreover, the user interface 2310 may output the result of the generative artificial intelligence system to the user. The output may be in the form of natural language or a specific content, and may also be provided in the form of an action requested by the user.

The AI framework 250 may receive an input of the user query, and coordinate and control each component necessary to perform the user's intention. The AI framework 250 may include a prompt design component 2351, an application and plugin (APIs/plugins) management component 2353, and an output modification component 2355.

The user query or action input through the user interface 2310 may be transmitted to the prompt design component 2351. The prompt design component 2351 may be used to generate a prompt suitable for the input into a large language model (LLM) or large multimodal models. The prompt design component 2351 may be an AI component that uses machine learning algorithms or neural networks to develop better prompts as time passes. The prompt design component 2351 may access a knowledge component including user preference data, a prompt library, and prompt examples to generate a prompt and transfer the same to a large language model (LLM) or a large multi-modal model (LMM).

The application and plugin management component 2353 may serve to perform communicating with external information if there is a request for additional information when a user input is transferred as the input of the generative model. The application and plug-in management component 2353 may construct a channel capable of communicating with the outside of the AI interface through an application programming interface (API), thereby allowing access to various data sources. In addition, when an action for performing the user query rather than the intermediate result should be finally performed by an application or a service, the application and plugin management component 2353 may make a request for the corresponding action through an API. The information secured from the outside may be transferred as the input of the generative model together with the user input.

The output modification component 2355 may finely tune the result output from the generative model. For example, the output modification component 2355 may verify whether the content generated through a language model (LLM) or a large-scale multimodal model (LMM) is irrelevant, includes biased content, or includes harmful content. In addition, the output correction component 2355 may determine to which extent the output conforms to a desired result of the user, and if an additional process is needed, perform the corresponding process. Additionally, the output correction component 2355 may configure a hint for avoiding an unintended output and provide the same to the user.

The generative AI model 2370 generally refers to an artificial intelligence neural network that makes new types of data, depending on user input information. Typical models for generating images include a generative adversarial network (GAN) and a variational auto encoder (VAE), and recently, a diffusion-based generative model using a VAE and a Transformer structure is referred to as a generative model. In addition, the language model is a model trained to output the most appropriate output value statistically based on the input value, and examples thereof representatively include models such as CHAT-GPT 3 and CHAT-GPT 4. Moreover, the model may recognize various types of data inputs, such as text, images, and sounds, and generate new data in response thereto, and thus is called a large multimodal model (LMM).

A method of operating an electronic device 101 according to an embodiment of the disclosure may include an operation of identifying a screen size of at least a part of a user interface (UI) screen for displaying summary content and font size to be used for displaying the summary content, an operation of identifying a length of text for the summary content, based on the screen size and the font size, an operation of transmitting a request including first information related to the summary content and second information related to the length of the text associated with the summary content to a server, based on a user input, an operation of acquiring the summary content from the server in response to the request, and an operation of displaying at least the part of the user interface screen through the display of the electronic device, based on the acquired summary content.

The first information may include original content associated with the summary content and information for acquiring the original content.

The operation of identifying of the screen size may include an operation of identifying, as the screen size, at least one of a size of one window among multiple windows, a size of an activated display area of the display, or a size of a predetermined content area within an application.

The method may include an operation of, when original content of content requested by a user is equal to or less than a predetermined reference value of the screen size, display the original content and an operation of, when the original content of the content requested by the user exceeds the predetermined reference value of the screen size, identify the length of the text for the summary content.

The operation of acquiring may include an operation of determining whether the generation of the summary content is possible and an operation of, when the generation of the summary content is possible, generating the summary content, based on the determined length of the text.

The method may further include an operation of, when an image is included in original content associated with the summary content, including a size of an image associated with the summary content and a number of images in the second information.

The method may further include an operation of, when a size of a screen for displaying the summary content while the acquired summary content is displayed, reconfiguring and displaying the summary content, based on the changed screen size.

The method may further include an operation of performing control to display original content following the summary content, based on a scroll input of a user.

The method may further include an operation of displaying the summary content instead of original content associated with the summary content, based on an application configuration.

The method may further include an operation of displaying an object indicating the summary content while the acquired summary content is displayed and an operation of displaying original content associated with the summary content instead of the summary content, based on a user input of selecting the object.

Various embodiments of the disclosure disclosed in the specifications and drawings present specific examples for ease of description of the technical content of the disclosure and to help understanding of the disclosure, but are not intended to limit the scope of the disclosure. Therefore, it should be construed that not only the embodiments disclosed herein but also all modifications or modified forms capable of being derived on the basis of the technical idea of the disclosure are included in the scope of the disclosure.

## Claims

1. An electronic device (101) comprising:
a display (160);
a processor (120); and
a memory, wherein instructions stored in the memory cause, when the processor is executed, the electronic device to
identify a screen size of at least a part of a user interface (UI) screen for displaying summary content and font size to be used for displaying the summary content,
identify a length of text for the summary content, based on the screen size and the font size,
transmit a request including first information related to the summary content and second information related to the length of the text associated with the summary content to a server, based on a user input,
acquire the summary content from the server in response to the request, and
display at least the part of the user interface screen through the display, based on the acquired summary content.

2. The electronic device of claim 1, wherein the length of the text is a number of texts displayable on a screen for displaying the summary content.

3. The electronic device of claim 1, wherein the instructions cause, when the processor is executed, the electronic device to identify, as the screen size, at least one of a size of one window among multiple windows, a size of an activated display area of the display, or a size of a predetermined content area within an application.

4. The electronic device of claim 1, wherein the instructions cause, when the processor is executed, the electronic device to:
in case that original content of content requested by a user is equal to or less than a predetermined reference value of the screen size, display the original content; and
in case that the original content of the content requested by the user exceeds the predetermined reference value of the screen size, identify the length of the text for the summary content.

5. The electronic device of claim 1, wherein the number of texts included in the summary content becomes smaller in case that the font size is large, and the number of texts included in the summary content becomes larger in case that the font size is small.

6. The electronic device of claim 1, wherein the instructions cause, when the processor is executed, the electronic device to, in case that an image is included in original content associated with the summary content, include a size of an image associated with the summary content or a number of images in the second information.

7. The electronic device of claim 1, wherein the instructions cause, when the processor is executed, the electronic device to, in case that a size of a screen for displaying the summary content is changed while the acquired summary content is displayed, reconfigure and display the summary content, based on the changed screen size.

8. The electronic device of claim 1, wherein the instructions cause, when the processor is executed, the electronic device to perform control to display original content following the summary content, based on a scroll input of a user.

9. The electronic device of claim 1, wherein the instructions cause, when the processor is executed, the electronic device to display the summary content instead of original content associated with the summary content, based on an application configuration.

10. The electronic device of claim 1, wherein the instructions cause, when the processor is executed, the electronic device to:
display an object indicating the summary content while the acquired summary content is displayed; and
display original content associated with the summary content instead of the summary content, based on a user input of selecting the object.

11. A method of operating an electronic device (101), the method comprising:
identifying a screen size of at least a part of a user interface (UI) screen for displaying summary content and font size to be used for displaying the summary content;
identifying a length of text for the summary content, based on the screen size and the font size;
transmitting a request including first information related to the summary content and second information related to the length of the text associated with the summary content to a server, based on a user input;
acquiring the summary content from the server in response to the request; and
displaying at least the part of the user interface screen through the display of the electronic device, based on the acquired summary content.

12. The method of claim 11, wherein the length of the text is a number of texts displayable on a screen for displaying the summary content.

13. The method of claim 11, wherein the identifying of the screen size comprises identifying, as the screen size, at least one of a size of one window among multiple windows, a size of an activated display area of the display, or a size of a predetermined content area within an application.

14. The method of claim 11, comprising:
in case that original content of content requested by a user is equal to or less than a predetermined reference value of the screen size, display the original content; and
in case that the original content of the content requested by the user exceeds the predetermined reference value of the screen size, identify the length of the text for the summary content.

15. The method of claim 11, wherein the number of texts included in the summary content becomes smaller in case that the font size is large, and the number of texts included in the summary content becomes larger in case that the font size is small.
